# EUROPÄISCHE PATENTSCHRIFT

(11) **EP 1 988 998 B1**
(45) Veröffentlichungstag und Bekanntmachung des Hinweises auf die Patenterteilung: **15.06.2011**
(21) Anmeldenummer: 07704548.2
(22) Anmeldetag: 13.02.2007
(51) Int. Cl.: B01J 31/24, B01J 31/18

(54) **VERBESSERTES VERFAHREN ZUR HERSTELLUNG VON NICKEL(0)-PHOSPHORLIGAND-KOMPLEXEN**
IMPROVED PROCESS FOR PRODUCING NICKEL(0)-PHOSPHORUS LIGAND COMPLEXES
PROCEDE AMELIORE DE FABRICATION DE COMPLEXES NICKEL(0)-LIGAND PHOSPHORE

(30) Priorität: 22.02.2006 EP 06110259
(43) Veröffentlichungstag der Anmeldung: 12.11.2008
(73) Patentinhaber: BASF SE, 67056 Ludwigshafen (DE)
(72) Erfinder: HADERLEIN, Gerd, 67269 Grünstadt (DE); AECHTNER, Tobias, 68165 Mannheim (DE); LEITNER, Andreas, 67071 Ludwigshafen (DE); PFAB, Peter, 67433 Neustadt (DE); LUYKEN, Hermann, 67069 Ludwigshafen (DE); SCHEIDEL, Jens, 69493 Hirschberg (DE)
(86) Internationale Anmeldenummer: PCT/EP2007/051374
(87) Internationale Veröffentlichungsnummer: WO 2007/096274

(56) Entgegenhaltungen:
- WO-A-2005/073174
- US-A- 3 631 191
- US-A1- 2004 176 622
- FLOCH LE P ET AL: "Use of 2,2'-Biphosphinines for the Stabilization of Reduced Transition Metal Species: Electrochemical Reduction of Bis(2,2'- biphosphinine)nickel(0)" INORGANIC CHEMISTRY, AMERICAN CHEMICAL SOCIETY, EASTON, US, Bd. 34, Nr. 1, 1995, Seiten 11-12, XP002313335 ISSN: 0020-1669
- MEZAILLES N ET AL: "Synthesis and X-ray crystal structures of dimeric nickel(0) and tetrameric copper(I) iodide complexes of 2-diphenylphosphino-3-methyl phosphinine" JOURNAL OF ORGANOMETALLIC CHEMISTRY, ELSEVIER-SEQUOIA S.A. LAUSANNE, CH, Bd. 541, Nr. 1-2, 15. August 1997 (1997-08-15), Seiten 277-283, XP004093727 ISSN: 0022-328X
- CASALNUOVO A L ET AL: "LIGAND ELECTRONIC EFFECTS IN ASYMMETRIC CATALYSIS: ENHANCED ENANTIOSELECTIVITY IN THE ASYMMETRIC HYDROCYANATION OF VINYLARENES" 1994, JOURNAL OF THE AMERICAN CHEMICAL SOCIETY, AMERICAN CHEMICAL SOCIETY, WASHINGTON, DC, US, PAGE(S) 9869-9882 , XP001021205 ISSN: 0002-7863 Seite 9879, Spalte 1, Absatz 9 - Spalte 2, letzter Absatz Seite 9880, Spalte 1, Absatz 3 - Seite 9882, Spalte 1, Absatz 6

## Beschreibung

Die Erfindung betrifft ein Verfahren zur Herstellung von Nickel(0)-Phosphortigand-Komplexen enthaltend mindestens ein Nickel(0)-Zentralatom und mindestens einen phosphorhaltigen Liganden, durch Umsetzung von Nickel(11)-halogeniden oder Nickel(11)-halogenid-Ether-Addukten mit Metallen, die elektropositiver sind als Nickel als Reduktionsmittel in Gegenwart des Liganden zu einer Reaktionsmischung, dadurch gekennzeichnet, dass
a) bei der Umsetzung das Molverhältnis Reduktionsmittel : Nickel(II)-Verbindung 1 : 1 bis 1000 : 1 beträgt, gerechnet als molares Verhältnis der Redoxäquivalente,
b) bei der Umsetzung das Molverhältnis phosphorhaltiger Ligand : Nickel(II)-Verbindung maximal 30 : 1 beträgt, gerechnet als molares Verhältnis P-Atome : Ni-Atome,
c) in der erhaltenen Reaktionsmischung der Nickel(0)-Gehalt maximal 1,3 Gew.-% beträgt, und
d) die erhaltene Reaktionsmischung extrahiert wird, indem man mindestens ein Dinitril und mindestens einen Kohlenwasserstoff zufügt, wobei sich mindestens zwei nichtmischbare Phasen bilden.

Für Hydrocyanierungen von Alkenen sind Nickelkomplexe von Phosphorliganden geeignete Katalysatoren. So sind beispielsweise Nickelkomplexe mit einzähnigen Phosphiten bekannt, welche die Hydrocyanierung von Butadien zu einer Mischung aus isomeren Pentennitrilen, beispielsweise linearem 3-Pentennitril und verzweigtem 2-Methyl-3-butennitril, katalysieren. Diese Katalysatoren eignen sich u.a. auch für die anschließende Isomerisierung des 2-Methyl-3-butennitrils zu 3-Pentennitril, und außerdem für die Hydrocyanierung des 3-Pentennitrils zu Adipodinitril, einem wichtigen Zwischenstoff bei der Herstellung von Polyamiden.

Es sind verschiedene Verfahren zur Herstellung der genannten Nickelkomplexe bekannt, darunter solche, bei denen ein Reduktionsmittel mitverwendet wird:

US 3,846,461 beschreibt ein Verfahren zur Herstellung von nullwertigen Nickelkomplexen mit Triorganophosphit-Liganden durch Reaktion von Triorganophosphit-Verbindungen mit Nickelchlorid in der Gegenwart eines feinverteilten Reduktionsmetalls, das elektropositiver als Nickel ist. Die Umsetzung gemäß US 3,846,461 findet in Gegenwart eines Promotors statt, der ausgewählt ist aus der Gruppe bestehend aus NH₃, NH₄X, Zn(NH₃)₂X₂ und Mischungen von NH₄X und ZnX₂, worin X einem Halogenid entspricht.

Neue Entwicklungen haben gezeigt, dass es vorteilhaft ist, bei der Hydrocyanierung von Alkenen Nickelkomplexe mit Chelatliganden (mehrzähnigen Liganden) einzusetzen, da mit diesen bei erhöhter Standzeit sowohl höhere Aktivitäten als auch höhere Selektivitäten erzielt werden können. Das obige Verfahren des Standes der Technik eignet sich nicht zur Herstellung von Nickelkomplexen mit Chelatliganden. Jedoch sind auch Verfahren bekannt, mit denen man ausgehend von zweiwertigen Nickelverbindungen und Chelatliganden durch Reduktion Nickel(0)-Komplexe mit Chelatliganden herstellen kann. Dabei wird üblicherweise bei hohen Temperaturen gearbeitet, sodass sich thermisch labile Liganden im Komplex gegebenenfalls zersetzen.

US 2003/0100442 A1 beschreibt ein Verfahren zur Herstellung eines Nickel(0)-Chelatkomplexes, bei dem in Gegenwart eines Chelatliganden und eines nitrilhaltigen Lösungsmittels Nickelchlorid mit einem elektropositiveren Metall als Nickel, insbesondere Zink oder Eisen, reduziert wird. Um eine hohe Raum-Zeit-Ausbeute zu erreichen, wird ein molarer Überschuss an Nickelsalz bezogen auf das als Reduktionsmittel wirksame Metall verwendet, der im Anschluss an die Komplexierung wieder abgetrennt werden muss. Das Verfahren wird in der Regel mit wasserhaltigem Nickelchlorid durchgeführt, was insbesondere bei der Verwendung von hydrolyselabilen Liganden zu deren Zersetzung führen kann. Wenn man, insbesondere bei der Verwendung von hydrolyselabilen Liganden, mit wasserfreiem Nickelchlorid arbeitet, ist es gemäß US 2003/0100442 A1 wesentlich, dass das Nickelchlorid zunächst nach einem speziellen Verfahren getrocknet wird, bei dem sehr kleine Teilchen mit großer Oberfläche und damit hoher Reaktivität erhalten werden. Ein Nachteil des Verfahrens liegt insbesondere darin, dass dieser durch Sprühtrocknung hergestellte Feinstaub von Nickelchlorid krebserregend ist. Ein weiterer Nachteil dieses Verfahrens ist, dass im Allgemeinen bei erhöhten Reaktionstemperaturen gearbeitet wird, was insbesondere bei temperaturlabilen Liganden zur Zersetzung des Liganden oder des Komplexes führen kann.

GB 1 000 477 und BE 621 207 betreffen Verfahren zur Herstellung von Nickel(0)-Komplexen durch Reduktion von Nickel(II)-Verbindungen unter Verwendung von phosphorhaltigen Liganden.

US 4,385,007 beschreibt ein Verfahren zur Herstellung von Nickel(0)-Komplexen, die als Katalysatoren in Kombination mit Organoboran als Promotor für die Herstellung von Dinitrilen verwendet werden. Dabei werden der Katalysator und der Promotor aus einer katalytisch aktiven Masse gewonnen, die bereits bei der Herstellung von Adipodinitril durch Hydrocyanierung von Pentennitrilen verwendet wurde.

US 3,859,327 beschreibt ein Verfahren zur Herstellung von Nickel(0)-Komplexen, die als Katalysatoren in Kombination mit Zinkchlorid als Promotor für die Hydrocyanierung von Pentennitrilen verwendet werden. Dabei werden Nickelquellen verwendet, die aus Hydrocyanierungsreaktionen stammen.

Die WO 2005/042157 A2 beschreibt ein Verfahren zur Herstellung von Nickel(0)-Phosphorligand-Komplexen, bei dem man ein Nickel(II)-Ether-Addukt in Gegenwart eines phosphorhaltigen Liganden reduziert. Als Reduktionsmittel kommen u.a. Metalle, die elektropositiver sind als Nickel, in Betracht, z.B. Zink oder Eisen. Das molare Verhältnis der Redoxäquivalente zwischen der Nickel(II)-Quelle und dem Reduktionsmittel beträgt 1:1 bis 1:100. Die WO 2005/042156 A1 beschreibt ein ähnliches Verfahren ausgehend von Nickelbromid oder Nickeliodid. In beiden Schriften wird eine anschließende Extraktion der erhaltenen Reaktionsmischung nicht erwähnt.

Die Herstellung von Adipodinitril durch Hydrocyanierung von Butadien erfolgt in mehreren Schritten. In einem ersten Schritt muss die Reaktion zunächst auf der Stufe der C₅-Nitrile gestoppt werden, um das erhaltene lineare 3-Pentennitril vom ebenfalls erhaltenen verzweigten 2-Methyl-3-butennitril (aus dem bei weiterer Hydrocyanierung das unerwünschte Methylglutarnitril entsteht) abzutrennen. In einem zweiten Schritt wird das abgetrennte 2-Methyl-3-butennitril in das lineare 3-Pentennitril isomerisiert. Die vereinigten 3-Pentennitril-Ströme werden schließlich in einem dritten Schritt zu Adipodinitril hydrocyaniert. Ein Verfahren zur Herstellung von linearem 3-Pentennitril ist in der WO 2005/073171 A1 beschrieben.

In der WO 2005/073174 A1 wird ein Verfahren zur Herstellung von 3-Pentennitril beschrieben, bei dem die Hydrocyanierung von Butadien und die Isomerisierung von 2-Methyl-3-butennitril über die Katalysatorkreisläufe miteinander gekoppelt sind. S. 37 und 63-68 offenbaren einen Verfahrensschritt j*), bei dem ein Strom eines mit Phosphorliganden stabilisierten Nickel(0)-Katalysators durch Zusatz eines Dinitrilstromes und eines Kohlenwasserstoffstroms unter Erzeugung zweier nichtmischbarer Phasen extrahiert wird. Auf Seite 37 und 52-54 wird als Schritt h*) eine Katalysatorregenerierung durch Reduktion mit einem Reduktionsmittel (Metalle, die elektropositiver sind als Nickel; außerdem Metallalkyle, elektrischer Strom, komplexe Hydride und Wasserstoff) beschrieben. Bei der Herstellung der Katalysator-Komplexe wird ein bestimmter Nickel(0)-Gehalt der erhaltenen Reaktionsmischung (= Produkt) nicht erwähnt; der auf Seite 54 Zeile 31 genannte Ni(0)-Gehalt ist derjenige der zur Herstellung der Komplexe eingesetzten Rück-Katalysatorlösung (= Edukt). Eine Aufspaltung des gekoppelten Verfahren in eine Hydrocyanierung und eine getrennt davon ablaufende, d.h. nicht gekoppelte Isomerisierung wird ebenfalls nicht erwähnt.

Die WO 2004/101498 A2 lehrt die Hydrocyanierung ungesättigter Verbindungen mit einem Katalysator aus Organophosphorliganden und Nickel und anschließender Destillation, wobei das zu destillierende Gemisch ein Molverhältnis Organophosphorverbindung : Nickel (ausgedrückt als Atome P : Atome Ni) ≤ 15, und/oder eine Nickelkonzentration ≤ 1,3 Gew.-% aufweist, und/oder die Destillationssumpftemperatur ≤ 180°C beträgt. Zwar wird auf Seite 6 bis 7 ein Extraktionsschritt unter Zugabe eines alipahtischen Kohlenwasserstoffs erwähnt, nicht jedoch das Zufügen eines Dinitrils bei der Extraktion. Eine Umsetzung einer Nickel(II)-Verbindung mit einem Reduktionsmittel wird nicht erwähnt.

Aus der WO 2005/073170 A1 ist bekannt, dass die Hydrocyanierung dann nach der ersten Stufe (Erhalt der C₅-Nitrile) stoppt, wenn der Nickel(0)-Katalysator keine Lewissäuren enthält. Es ist daher sehr vorteilhaft, als Katalysator für die Hydrocyanierung von Butadien einen Nickel(0)-Phosphorligand-Komplex einzusetzen, der Lewissäurefrei ist.

Zudem sind viele Lewissäuren korrosiv, weshalb für die Produktionsanlagen zur Katalysatorsynthese und zur Hydrocyanierung korrosionsbeständige und damit teuere Werkstoffe erforderlich sind. Lewissäure-freie Produktströme würden Bau und Betrieb bestimmter Anlagenteile kostengünstiger machen.

Es bestand die Aufgabe, den geschilderten Nachteilen abzuhelfen und ein verbessertes Verfahren zur Herstellung von Nickel(0)-Phosphorligand-Komplexen - diese werden nachfolgend auch als Nickel(0)-Komplexe oder Ni(0)-Komplexe bezeichnet - bereit zu stellen.

Insbesondere sollten sich mit diesem Verfahren Mischungen (z.B. Lösungen oder Suspensionen) enthaltend Nickel(0)-Phosphorligand-Komplexe herstellen lassen, die keine Lewissäuren enthalten. Der Lewissäure-freie Katalysator sollte bei Hydrocyanierungsreaktionen und Isomerisierungsreaktionen eingesetzt werden können.

Demgemäß wurde das eingangs definierte Verfahren zur Herstellung der Nickel(0)-Komplexe gefunden. Bevorzugte Ausführungsformen der Erfindung sind den Unteransprüchen zu entnehmen.

Alle nachfolgenden Druckangaben sind Absolutdrucke. Nickel(0) oder Ni(0) bedeutet Nickel in der Oxidationsstufe null, und Nickel(II) oder Ni(II) bedeutet Nickel in der Oxidationsstufe +2.

### Nickel(II)-Verbindung

Die Nickel(II)-Verbindung ist ausgewählt aus Nickel(II)halogeniden und Nickel(II)-Ether-Addukten, insbesondere aus Nickel(II)halogeniden und Nickel(II)halogenid-Ether-Addukten. Als Nickelhalogenide kommen vorzugsweise Nickelchlorid, Nickelbromid oder Nickeliodid bzw. deren Mischungen in Betracht.

Nickelbromid und Nickeliodid können als solches eingesetzt werden, insbesondere und im Gegensatz zu Nickelchlorid ohne die in US 2003/0100442 A1 beschriebene Sprühtrocknung. Für Nickelbromid und Nickeliodid ist ein Trocknungsverfahren überflüssig, da die Reaktivität dieser Nickelquellen unabhängig von der Kristallgröße erreicht wird. Nachteilig ist eine Trocknung allerdings nicht.

In dem erfindungsgemäßen Verfahren können Nickelbromid und Nickeliodid jeweils als Anhydrat oder Hydrat verwendet werden. Unter einem Hydrat von Nickelbromid bzw. -iodid wird im Sinne der vorliegenden Erfindung ein Di- oder Hexahydrat oder eine wässrige Lösung verstanden. Bevorzugt ist die Verwendung von Anhydraten von Nickelbromid bzw. -iodid, um eine Hydrolyse des Liganden im Wesentlichen zu vermeiden.

Nickelchlorid wird bevorzugt in getrockneter Form, insbesondere sprühgetrocknet wie in der US-Schrift beschrieben, eingesetzt. Alternativ kann man durch Azeotropdestillation trocknen, wie sie in der WO 2005/042549 A1 und nachfolgend näher beschrieben ist:

Bei der Azeotropdestillation wird ein wasserhaltiges Nickel(II)-halogenid verwendet. Wasserhaltiges Nickel(II)-halogenid ist ein Nickelhalogenid, welches ausgewählt ist aus der Gruppe von Nickelchlorid, Nickelbromid und Nickeliodid, das mindestens 2 Gew.-% Wasser enthält. Beispiele hierfür sind Nickelchlorid-Dihydrat, Nickelchlorid-Hexahydrat, eine wässrige Lösung von Nickelchlorid, Nickelbromid-Trihydrat, eine wässrige Lösung von Nickelbromid, Nickeliodid-Hydrate oder eine wässrige Lösung von Nickeliodid. Im Fall von Nickelchlorid werden bevorzugt Nickelchlorid-Hexahydrat oder eine wässrige Lösung von Nickelchlorid eingesetzt. Im Fall von Nickelbromid und Nickeliodid werden bevorzugt die wässrigen Lösungen eingesetzt. Besonders bevorzugt ist eine wässrige Lösung von Nickelchlorid.

Im Falle einer wässrigen Lösung ist die Konzentration des Nickel(II)-halogenids in Wasser an sich nicht kritisch. Als vorteilhaft hat sich ein Anteil des Nickel(II)-halogenids an der Gewichtssumme aus Nickel(II)-halogenid und Wasser von mindestens 0,01 Gew.-%, vorzugsweise mindestens 0,1 Gew.-%, besonders bevorzugt mindestens 0,25 Gew.-%, insbesondere bevorzugt mindestens 0,5 Gew.-%, und höchstens 80 Gew.-%, vorzugsweise höchstens 60 Gew.-%, besonders bevorzugt höchstens 40 Gew.-% erwiesen. Aus praktischen Gründen ist es von Vorteil, einen Anteil von Nickelhalogenid in der Mischung aus Nickelhalogenid und Wasser nicht zu überschreiten, der unter den gegebenen Temperatur- und Druckbedingungen eine homogene Lösung ergibt in dem Sinne, dass kein ungelöster Feststoff verbleibt. Im Falle einer wässrigen Lösung von Nickelchlorid ist es daher aus praktischen Gründen von Vorteil, bei Raumtemperatur (20°C) einen Anteil von Nickelchlorid an der Gewichtssumme aus Nickelchlorid und Wasser von höchstens 31 % Gew.-% zu wählen. Bei anderen Temperaturen können entsprechend andere Konzentrationen gewählt werden, die sich aus der Löslichkeit von Nickelchlorid in Wasser bei der jeweiligen Temperatur ergeben.

Das wasserhaltige Nickel(II)-halogenid wird durch eine Azeotropdestillation getrocknet. In einer bevorzugten Ausführungsform ist die Azeotropdestillation ein Verfahren zur Entfernung von Wasser aus dem entsprechenden wasserhaltigen Nickel(II)-halogenid, wobei dieses mit einem Verdünnungsmittel versetzt wird,
- dessen Siedepunkt im Falle der Nichtazeotrop-Bildung des Verdünnungsmittels mit Wasser unter den Druckbedingungen der nachfolgend genannten Destillation höher ist als der Siedepunkt von Wasser und das an diesem Siedepunkt des Wassers flüssig vorliegt, oder
- das ein Azeotrop oder Heteroazeotrop mit Wasser unter den Druck- und Temperaturbedingungen der nachfolgend genannten Destillation bildet,
und die Mischung, enthaltend das wasserhaltige Nickel(II)-halogenid und das Verdünnungsmittel, unter Abtrennung von Wasser oder des genannten Azeotrops oder des genannten Heteroazeotrops von dieser Mischung und unter Erhalt einer wasserfreien Mischung M, enthaltend Nickel(II)-halogenid und das besagte Verdünnungsmittel, destilliert wird.

Die zu destillierende Ausgangsmischung kann neben dem wasserhaltigen Nickel(II)-halogenid weitere Bestandteile enthalten, wie ionische oder nichtionische, organische oder anorganische Verbindungen, insbesondere solche, die mit der Ausgangsmischung homogen einphasig mischbar oder in der Ausgangsmischung löslich sind. Bevorzugt versetzt man das wasserhaltige Nickel(II)-halogenid mit einem Verdünnungsmittel, dessen Siedepunkt unter den Druckbedingungen der Destillation höher ist als der Siedepunkt von Wasser und das an diesem Siedepunkt des Wassers flüssig vorliegt. Die Druckbedingungen für die nachfolgende Destillation sind an sich nicht kritisch. Als vorteilhaft haben sich Drücke von mindestens 10⁻⁴ MPa, vorzugsweise min-, destens 10⁻³ MPa, insbesondere mindestens 5•10⁻³ MPa erwiesen. Als vorteilhaft haben sich Drücke von höchstens 1 MPa, vorzugsweise höchstens 5•10⁻¹ MPa, insbesondere höchstens 1,5 • 10⁻¹ MPa erwiesen.

In Abhängigkeit von den Druckbedingungen und der Zusammensetzung des zu destillierenden Gemischs stellt sich dann die Destillationstemperatur ein. Bei dieser Temperatur liegt das Verdünnungsmittel vorzugsweise flüssig vor. Im Sinne der vorliegenden Erfindung wird unter dem Begriff Verdünnungsmittel sowohl ein einzelnes Verdünnungsmittel wie auch ein Gemisch solcher Verdünnungsmittel verstanden, wobei sich im Falle eines solchen Gemischs die in der vorliegenden Erfindung genannten physikalischen Eigenschaften auf dieses Gemisch beziehen.

Weiterhin weist das Verdünnungsmittel unter diesen Druck- und Temperaturbedingungen vorzugsweise einen Siedepunkt auf, der im Falle der Nichtazeotrop-Bildung des Verdünnungsmittels mit Wasser höher als der von Wasser liegt, vorzugsweise um mindestens 5°C, insbesondere mindestens 20°C, und vorzugsweise höchstens 200°C, insbesondere höchstens 100°C.

In einer bevorzugten Ausführungsform kann man Verdünnungsmittel einsetzen, die mit Wasser ein Azeotrop oder Heteroazeotrop bilden. Die Menge an Verdünnungsmittel gegenüber der Menge an Wasser in dem Gemisch ist an sich nicht kritisch. Vorteilhaft sollte man mehr flüssiges Verdünnungsmittel einsetzen als den durch die Azeotrope abzudestillierenden Mengen entspricht, so dass überschüssiges Verdünnungsmittel als Sumpfprodukt verbleibt.

Setzt man ein Verdünnungsmittel ein, das mit Wasser kein Azeotrop bildet, so ist die Menge an Verdünnungsmittel gegenüber der Menge an Wasser in dem Gemisch an sich nicht kritisch.

Das eingesetzte Verdünnungsmittel ist dabei insbesondere ausgewählt aus der Gruppe bestehend aus organischen Nitrilen, aromatischen Kohlenwasserstoffen, aliphatischen Kohlenwasserstoffen und Mischungen der zuvor genannten Lösungsmittel. Bezüglich der organischen Nitrile werden vorzugsweise Acetonitril, Propionitril, n-Butyronitril, n-Valeronitril, Cyanocyclopropan, Acrylnitril, Crotonitril, Allylcyanid, cis-2-Pentennitril, ' trans-2-Pentennitril, cis-3-Pentennitril, trans-3-Pentennitril, 4-Pentennitril, 2-Methyl-3-butennitril, Z-2-Methyl-2-butennitril, E-2-Methyl-2-butennitril, Ethylsuccinnitril, Adipodinitril, Methylglutarnitril oder Mischungen davon verwendet. Bezüglich der aromatischen Kohlenwasserstoffe können vorzugsweise Benzol, Toluol, o-Xylol, m-Xylol, p-Xylol oder Mischungen davon verwendet werden. Aliphatische Kohlenwasserstoffe können vorzugsweise aus der Gruppe der linearen oder verzweigten aliphatischen Kohlenwasserstoffe, besonders bevorzugt aus der Gruppe der Cycloaliphaten, wie Cyclohexan oder Methylcyclohexan, oder Mischungen davon gewählt werden. Besonders bevorzugt werden cis-3-Pentennitril, trans-3-Pentennitril, Adipodinitril, Methylglutarnitril oder Mischungen daraus als Lösungsmittel verwendet.

Setzt man als Verdünnungsmittel ein organisches Nitril bzw. Mischungen, enthaltend mindestens ein organisches Nitril ein, so hat es sich als vorteilhaft erwiesen, die Menge an Verdünnungsmittel so zu wählen, dass in der fertigen Mischung der Anteil des Nickel(II)-halogenids an der Gewichtssumme aus Nickel(II)-halogenid und Verdünnungsmittel mindestes 0,05 Gew.-%, vorzugsweise mindestens 0,5 Gew.-%, besonders bevorzugt mindestens 1 Gew.-% beträgt, und ebenso vorteilhaft höchstens 50 Gew.-%, vorzugsweise höchstens 30 Gew.-%, besonders bevorzugt höchstens 20 Gew.-% und insbesondere höchstens 10 Gew.-% beträgt.

Man destilliert die Mischung, enthaltend das wasserhaltige Nickel(II)-halogenid und das Verdünnungsmittel, unter Abtrennung von Wasser von dieser Mischung und unter Erhalt einer wasserfreien Mischung M, enthaltend Nickel(II)-halogenid und das besagte Verdünnungsmittel. In einer bevorzugten Ausführungsform wird zunächst die Mischung hergestellt und anschließend destilliert. In einer anderen bevorzugten Ausführungsform wird das wasserhaltige Nickelhalogenid, besonders bevorzugt die wässrige Lösung des Nickelahlogenids, während der Destillation nach und nach zu dem siedenden Verdünnungsmittel zugegeben. Dadurch kann die Bildung eines verfahrenstechnisch schwer , zu handhabenden, schmierigen Feststoffs im wesentlichen vermieden werden.

Im Falle von Pentennitril als Verdünnungsmittel kann man die Destillation vorteilhaft bei einem Druck von höchstens 200 kPa, vorzugsweise höchstens 100 kPa, insbesondere höchstens 50 kPa, besonders bevorzugt höchstens 20 kPa, und ebenso bevorzugt bei einem Druck von mindestens 1 kPa, vorzugsweise mindestens 5 kPa, besonders bevorzugt 10 kPa, durchführen.

Die Destillation kann vorteilhaft durch einstufige Verdampfung, bevorzugt durch fraktionierende Destillation in einer oder mehreren, beispielsweise zwei oder drei, Destillationsapparaturen erfolgen. Dabei kommen für die Destillation hierfür übliche Apparaturen in Betracht, wie sie beispielsweise in Kirk-Othmer, Encyclopedia of Chemical Technology, 3. Ed., Vol. 7, John Wiley & Sons, New York, 1979, Seite 870-881 beschrieben sind, wie Siebbodenkolonnen, Glockenbodenkolonnen, Packungskolonnen, Füllkörperkolonnen, Kolonnen mit Seitenabzug oder Trennwandkolonnen. Die Destillation kann diskontinuierlich oder kontinuierlich erfolgen.

Als Nickel(II)-Ether-Addukte eignen sich enthält bevorzugt wasserfreie Addukte. Das Nickel(II)-Ether-Addukt enthält ein Nickel(II)halogenid, vorzugsweise Nickelchlorid, Nickelbromid und Nickeliodid. Besonders bevorzugt ist Nickelchlorid.

Das Nickel(II)-Ether-Addukt umfasst vorzugsweise einen sauerstoffhaltigen, schwefelhaltigen oder gemischten sauerstoff-schwefelhaltigen Ether. Dieser ist vorzugsweise ausgewählt aus der Gruppe bestehend aus Tetrahydrofuran, Dioxan, Diethylether, Din-propylether, Diisopropylether, Di-n-butylether, Di-sec-butylether, Ethylenglykoldialkylether, Diethylenglykoldialkylether und Triethylengykoldialkylether.

Als Ethylenglykoldialkylether wird bevorzugt Ethylenglykoldimethylether (1,2-Dimethoxyethan, Glyme) und Ethylenglykoldiethylether verwendet. Als Diethylenglykoldialkylether wird bevorzugt Diethylenglykoldimethylether (Diglyme) verwendet. Als Triethylengykoldialkylether wird bevorzugt Triethylengykoldimethylether (Triglyme) verwendet.

Besonders bevorzugte Nickel(II)-Ether-Addukte sind das Nickel(II)chlorid-Ethylenglykoldimethylether-Addukt (NiCl₂• dme), das Nickel(II)chlorid-Dioxan-Addukt (NiCl₂• dioxan), und das Nickel(II)bromid-Ethylenglykoldimethylether-Addukt (NiBr₂• dme). Besonders bevorzugt ist die Verwendung von NiCl₂• dme, welches sich beispielsweise gemäß Beispiel 2 der DE-A 2 052 412 herstellen lässt. Dabei wird Nickelchlorid-Dihydrat in Gegenwart von 1,2-Dimethoxyethan mit Triethylorthoformiat als Dehydratisierungsmittel umgesetzt. Alternativ kann die Umsetzung auch mit Hilfe von Trimethylorthoformiat durchgeführt werden. Die Addukte NiCl₂ • dioxan und NiBr₂ • dme lassen sich in analogen Reaktionen herstellen, wobei Dioxan statt 1,2-Dimethoxyethan bzw. Nickelbromid-Hydrat statt Nickelchlorid-Hydrat eingesetzt wird.

In einer bevorzugten Ausführungsform der vorliegenden Erfindung wird das Nickel(II)-Ether-Addukt dadurch hergestellt, dass man eine wässrige Lösung des Nickelhalogenids mit dem jeweiligen Ether und einem Verdünnungsmittel, gegebenenfalls unter Rühren, versetzt und anschließend Wasser und gegebenenfalls überschüssigen Ether entfernt. Das Verdünnungsmittel wird dabei bevorzugt aus der oben für die Komplexbildung geeigneten Gruppe von Lösungsmitteln gewählt. Die Entfernung von Wasser und gegebenenfalls überschüssigem Ether erfolgt vorzugsweise durch Destillation. Eine detaillierte Beschreibung der Nickel(II)-Ether-Addukt-Synthese ist der eingangs erwähnten WO 2005/042157 A2 zu entnehmen.

Es ist möglich, das Nickel(II)-Ether-Addukt direkt in der so erhaltenen Lösung bzw. Suspension zur Herstellung der Nickel(0)-Phosphorligand-Komplexe zu verwenden. Alternativ kann das Addukt auch zunächst isoliert und gegebenenfalls getrocknet werden und zur Herstellung des Nickel(0)-Phosphorligand-Komplexes wieder gelöst bzw. resuspendiert werden. Eine Isolierung des Adduktes aus der Suspension kann durch dem Fachmann an sich bekannte Verfahren erfolgen, wie Filtration, Zentrifugation, Sedimentation oder durch Hydrocyclone, wie beispielsweise in Ullmann's Encyclopedia of Industrial Chemistry, Unit Operation I, Vol. B2, VCH, Weinheim, 1988, in Kapitel 10, Seiten 10-1 bis 10-59, Kapitel 11, Seiten 11-1 bis 11-27 und Kapitel 12, Seiten 12-1 bis 12-61, beschrieben.

### Katalysatoren und Liganden

Die Nickel(0)-Phosphorligand-Komplexe enthalten mindestens ein Nickel(0)-Zentralatom und mindestens einen phosphorhaltigen Liganden. Üblicherweise enthält die bei der beschriebenen Hydrocyanierung bzw. Isometrisierung verwendete Katalysatormischung außerdem freie (nicht am Nickel-Komplex gebundene) phosphorhaltige Liganden.

Die phosphorhaltigen Liganden) der Nickel(0)-Komplexe und die freien phosphorhaltigen Liganden sind vorzugsweise ausgewählt aus Phosphinen, Phosphiten, Phosphiniten und Phosphoniten. Die Liganden können ein- oder zweizähnig (mono- oder bidentat) sein.

Die phosphorhaltigen Liganden weisen vorzugsweise die Formel I auf:

P (X¹R¹) (X²R²) (X³R³) (I)

Unter Verbindung I wird im Sinne der vorliegenden Erfindung eine einzelne Verbindung oder ein Gemisch verschiedener Verbindungen der vorgenannten Formel verstanden.

Die Gruppen X¹, X², X³ sind unabhängig voneinander Sauerstoff oder Einzelbindung. Falls alle der Gruppen X¹, X² und X³ für Einzelbindungen stehen, so stellt Verbindung I ein Phosphin der Formel P(R¹R²R³) mit den für R¹, R² und R³ in dieser Beschreibung genannten Bedeutungen dar.

Falls zwei der Gruppen X¹, X² und X³ für Einzelbindungen stehen und eine für Sauerstoff, so stellt Verbindung I ein Phosphinit der Formel P(OR¹)(R²)(R³) oder P(R¹)(OR²)(R³) oder P(R¹)(R²)(OR³) mit den für R¹, R² und R³ weiter unten genannten Bedeutungen dar.

Falls eine der Gruppen X¹, X² und X³ für eine Einzelbindung steht und zwei für Sauerstoff, so stellt Verbindung I ein Phosphonit der Formel P(OR¹)(OR²)(R³) oder P(R¹)(OR²)(OR³) oder P(OR¹)(R²)(OR³) mit den für R¹, R² und R³ in dieser Beschreibung genannten Bedeutungen dar.

In einer bevorzugten Ausführungsform sollten alle der Gruppen X¹, X² und X³ für Sauerstoff stehen, so dass Verbindung I vorteilhaft ein Phosphit der Formel P(OR¹)(OR²)(OR³) mit den für R¹, R² und R³ weiter unten genannten Bedeutungen darstellt.

R¹, R², R³ stehen unabhängig voneinander für gleiche oder unterschiedliche organische Reste. Als R¹, R² und R³ kommen unabhängig voneinander Alkylreste, vorzugsweise mit 1 bis 10 Kohlenstoffatomen, wie Methyl, Ethyl, n-Propyl, i-Propyl, n-Butyl, i-Butyl, s-Butyl, t-Butyl, Aryl-Gruppen, wie Phenyl, o-Tolyl, m-Tolyl, p-Tolyl, 1-Naphthyl, 2-naphthyl, oder Hydrocarbyl, vorzugsweise mit 1 bis 20 Kohlenstoffatomen, wie 1,1'-Biphenol, 1,1'-Binaphthol in Betracht. Die Gruppen R¹, R² und R³ können miteinander direkt, also nicht allein über das zentrale Phosphor-Atom, verbunden sein. Vorzugsweise sind die Gruppen R¹, R² und R³ nicht miteinander direkt verbunden.

In einer bevorzugten Ausführungsform kommen als Gruppen R¹, R² und R³ Reste ausgewählt aus der Gruppe bestehend aus Phenyl, o-Tolyl, m-Tolyl und p-Tolyl in Betracht. In einer besonders bevorzugten Ausführungsform sollten dabei maximal zwei der Gruppen R¹, R² und R³ Phenyl-Gruppen sein.

In einer anderen bevorzugten Ausführungsform sollten dabei maximal zwei der Gruppen R¹, R² und R³ o-Tolyl-Gruppen sein.

Als besonders bevorzugte Verbindungen I können solche der Formel la

(o-Tolyl-O-)_{w} (m-Tolyl-O-)ₓ (p-Tolyl-O-)_{y} (Phenyl-O-)_{z} P (la)

eingesetzt werden, wobei w, x, y und z eine natürliche Zahl bedeuten, und folgende Bedingungen gelten: w + x + y + z = 3 und w, z ≤ 2.

Solche Verbindungen la sind z.B. (p-Tolyl-O-)(Phenyl-O-)₂P, (m-Tolyl-O-)(Phenyl-O-)₂P, (o-Tolyl-O-) (Phenyl-O-)₂P, (p-Tolyl-O-)₂(Phenyl-O-)P , (m-Tolyl-O-)₂(Phenyl-O-)P, (o-Tolyl-O-)₂(Phenyl-O-)P, (m-Tolyl-O-)(p-Tolyl-O)(Phenyl-O-)P, (o-Tolyl-O-)(p-Tolyl-O-)(Phenyl-O-)P, (o-Tolyl-O-)(m-Tolyl-O-)(Phenyl-O-)P, (p-Tolyl-O-)₃P, (m-Tolyl-O-)(p-Tolyl-O-)₂P, (o-Tolyl-O-)(p-Tolyl-O-)₂P, (m-Tolyl-O-)₂(p-Toluyl-O-)P, (o-Tolyl-0-)2(p-Tolyl-O-)P, (o-Tolyl-O-)(m-Tolyl-O-)(p-Tolyl-O)P, (m-Tolyl-O-)₃P, (o-Tolyl-O-)(m-Tolyl-O-)₂P (o-Tolyl-O-)₂(m-Tolyl-O-)P, oder Gemische solcher Verbindungen.

Gemische enthaltend (m-Tolyl-O-)₃P, (m -Tolyl-O-)₂(p-Tolyl-O-)P, (m-Tolyl-O-)(p-Tolyl-O-)₂P und (p-Tolyl-O-)₃P kann man beispielsweise durch Umsetzung eines Gemisches enthaltend m-Kresol und p-Kresol, insbesondere im Molverhältnis 2 : 1, wie es bei der destillativen Aufarbeitung von Erdöl anfällt, mit einem Phosphortrihalogenid, wie Phosphortrichlorid, erhalten.

In einer anderen, ebenfalls bevorzugten Ausführungsform kommen als phosphorhaltige Liganden die in der DE-A 199 53 058 näher beschriebenen Phosphite der Formel Ib in Betracht:

P (O-R¹)ₓ (O-R²)_{y} (O-R³)_{z} (O-R⁴)ₚ (Ib)

mit
R¹: aromatischer Rest mit einem C₁-C₈-Alkylsubstituenten in o-Stellung zu dem Sauerstoffatom, das das Phosphoratom mit dem aromatischen System verbindet, oder mit einem aromatischen Substituenten in o-Stellung zu dem Sauerstoffatom, das das Phosphoratom mit dem aromatischen System verbindet, oder mit einem in o-Stellung zu dem Sauerstoffatom, das das Phosphoratom mit dem aromatischen System verbindet, anellierten aromatischen System,
R²: aromatischer Rest mit einem C₁-C₁₈-Alkyisubstituenten in m-Stellung zu dem Sauerstoffatom, das das Phosphoratom mit dem aromatischen System verbindet, oder mit einem aromatischen Substituenten in m-Stellung zu dem Sauerstoffatom, das das Phosphoratom mit dem aromatischen System verbindet, oder mit einem in m-Stellung zu dem Sauerstoffatom, das das Phosphoratom mit dem aromatischen System verbindet, anellierten aromatischen System, wobei der aromatische. Rest in o-Stellung zu dem Sauerstoffatom, das das Phosphoratom mit dem aromatischen System verbindet, ein Wasserstoffatom trägt,
R³: aromatischer Rest mit einem C₁-C₁₈-Alkylsubstituenten in p-Stellung zu dem Sauerstoffatom, das das Phosphoratom mit dem aromatischen System verbindet, oder mit einem aromatischen Substituenten in p-Stellung zu dem Sauerstoffatom, das das Phosphoratom mit dem.aromatischen System verbindet, wobei der aromatische Rest in o-Stellung zu dem Sauerstoffatom, das das Phosphoratom mit dem aromatischen System verbindet, ein Wasserstoffatom trägt, .
R⁴: aromatischer Rest, der in o-, m- und p-Stellung zu dem Sauerstoffatom, das das Phosphoratom mit dem aromatischen System verbindet, andere als die für R¹, R² und R³ definierten Substituenten trägt, wobei der aromatische Rest in o-Stellung zu dem Sauerstoffatom, das das Phosphoratom mit dem aromatischen System verbindet, ein Wasserstoffatom trägt, ..
x : 1 oder 2,
y, z, p: unabhängig voneinander 0, 1 oder 2 mit der Maßgabe, dass x+y+z+p = 3.

Bevorzugte Phosphite der Formel Ib sind der DE-A 199 53 058 zu entnehmen. Als Rest R¹ kommen vorteilhaft o-Tolyl-, o-Ethyl-phenyl-, o-n-Propyl-phenyl-, o-Isopropyl-phenyl-, o-n-Butyl-phenyl-, o-sek-Butyl-phenyl-, o-tert-Butyl-phenyl-, (o-Phenyl)-Phenyl- oder 1-Naphthyl- Gruppen in Betracht. '

Als Rest R² sind m-Tolyl-, m-Ethyl-phenyl-, m-n-Propyl-phenyl-, m-Isopropyl-phenyl-, m-n-Butyl-phenyl-, m-sek-Butyl-phenyl-, m-tert-Butyl-phenyl-, (m-Phenyl)-Phenyl- oder 2-Naphthyl- Gruppen bevorzugt.

Als Rest R³ kommen vorteilhaft p-Tolyl-, p-Ethyl-phenyl-, p-n-Propyl-phenyl-, p-Isopropyl-phenyl-, p-n-Butyl-phenyl-, p-sek-Butyl-phenyl-, p-tert-Butyl-phenyl- oder (p-Phenyl)-Phenyl-Gruppen in Betracht.

Rest R⁴ ist bevorzugt Phenyl. Vorzugsweise ist p gleich null. Für die Indizes x, y, z und p in Verbindung Ib ergeben sich folgende Möglichkeiten:

| x | y | z | p |
|---|---|---|---|
| 1 | 0 | 0 | 2 |
| 1 | 0 | 1 | 1 |
| 1 | 1 | 0 | 1 |
| 2 | 0 | 0 | 1 |
| 1 | 0 | 2 | 0 |
| 1 | 1 | 1 | 0 |
| 1 | 2 | 0 | 0 |
| 2 | 0 | 1 | 0 |
| 2 | 1 | 0 | 0 |

Bevorzugte Phosphite der Formel Ib sind solche, in denen p gleich null ist sowie R¹, R² und R³ unabhängig voneinander ausgewählt sind aus o-Isopropyl-phenyl, m-Tolyl und p-Tolyl, und R⁴ Phenyl ist.

Besonders bevorzugte Phosphite der Formel Ib sind solche, in denen R¹ der o-Isopropyl-phenyl-Rest, R² der m-Tolylrest und R³ der p-Tolylrest ist mit den in der vorstehenden Tabelle genannten Indizes; außerdem solche, in denen R¹ der o-Tolylrest, R² der m-Tolylrest und R³ der p-Tolylrest ist mit den in der Tabelle genannten Indizes; weiterhin solche, in denen R¹ der 1-Naphthylrest, R² der m-Tolylrest und R³ der p-Tolylrest ist mit den in der Tabelle genannten Indizes; außerdem solche, in denen R¹ der o-Tolylrest, R² der 2-Naphthylrest und R³ der p-Tolylrest ist mit den in der Tabelle genannten Indizes; und schließlich solche, in denen R¹ der o-Isopropyl-phenyl-Rest, R² der 2-Naphthylrest und R³ der p-Tolylrest ist mit den in der Tabelle genannten Indizes; sowie Gemische dieser Phosphite. '

Phosphite der Formel Ib können erhalten werden, indem man .
i) ein Phosphortrihalogenid mit einem Alkohol ausgewählt aus der Gruppe bestehend aus R^{I}OH, R²OH, R³OH und R⁴OH oder deren Gemische umsetzt unter Erhalt eines Dihalogenophosphorigsäuremonoesters,
ii) den genannten Dihalogenophosphorigsäuremonoester mit einem Alkohol ausgewählt aus der Gruppe bestehend aus R^{I}OH, R²0H, R³0H und R⁴0H oder deren Gemische umsetzt unter Erhalt eines Monohalogenophosphorigsäurediesters und
iii) den genannten Monohalogenophosphorigsäurediester mit einem Alkohol ausgewählt aus der Gruppe bestehend aus R^{I}OH, R²OH, R³OH und R⁴OH oder deren Gemische umsetzt unter Erhalt eines Phosphits der Formel Ib.

Die Umsetzung kann in drei getrennten Schritten durchgeführt werden. Ebenso können zwei der drei Schritte kombiniert werden, also i) mit ii) oder ii) mit iii). Alternativ können alle drei Schritte i) ii) und iii) miteinander kombiniert werden. Dabei kann man geeignete Parameter und Mengen der Alkohole ausgewählt aus der Gruppe bestehend aus R^{I}OH, R²0H, R³0H und R⁴0H oder deren Gemische durch einige einfache Vorversuche leicht ermitteln.

Als Phosphortrihalogenid kommen grundsätzlich alle Phosphortrihalogenide, vorzugsweise solche, in denen als Halogenid Cl, Br, 1, insbesondere CI, eingesetzt wird, sowie deren Gemische in Betracht. Es können auch Gemische verschiedener gleich oder unterschiedlich halogensubstituierter Phosphine als Phosphortrihalogenid eingesetzt werden. Besonders bevorzugt ist PC1₃. Weitere Einzelheiten zu den Reaktionsbedingungen bei der Herstellung der Phosphite lb und zur Aufarbeitung sind der DE-A 199 53 058 zu entnehmen.

Die Phosphite Ib können auch in Form eines Gemisches verschiedener Phosphite Ib als Ligand verwendet werden. Ein solches Gemisch kann beispielsweise bei der Herstellung der Phosphite Ib anfallen.

Es ist allerdings bevorzugt, dass der phosphorhaltige Ligand mehrzähnig, insbesondere zweizähnig ist. Daher weist der verwendete Ligand vorzugsweise die Formen 1 1 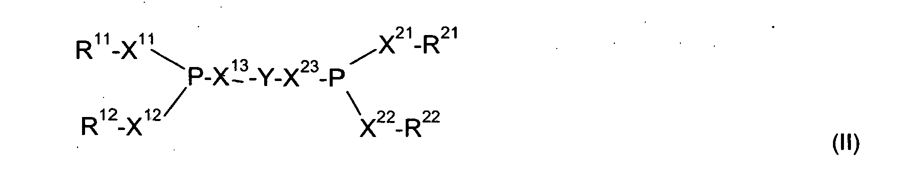 auf, worin bedeuten
- X11, X¹², X¹³, X²¹, X²², X²³: unabhängig voneinander Sauerstoff oder Einzelbindung
- R¹¹, R¹²: unabhängig voneinander gleiche oder unterschiedliche, einzelne oder verbrückte organische Reste
- R²1, R²²: unabhängig voneinander gleiche oder unterschiedliche, einzelne oder verbrückte organische Reste,
- Y: Brückengruppe.

Unter Verbindung II wird im Sinne der vorliegenden Erfindung eine einzelne Verbindung oder ein Gemisch verschiedener Verbindungen der vorgenannten Formel verstanden.

In einer bevorzugten Ausführungsform können X¹¹, X¹², X¹³, D²¹, X²², X²³ Sauerstoff darstellen. In einem solchen Fall ist die Brückengruppe Y mit Phosphit-Gruppen verknüpft.

In einer anderen bevorzugten Ausführungsform können X¹¹ und X¹² Sauerstoff und X¹³ eine Einzelbindung oder X¹¹ und X¹³ Sauerstoff und X¹² eine Einzelbindung darstellen, so dass das mit X¹¹, X¹² und X¹³ umgebene Phosphoratom Zentralatom eines Phosphonits ist. In einem solchen Fall können X²1, X²² und X²³ Sauerstoff oder X²¹ und X²² Sauerstoff und X²³ eine Einzelbindung oder X²¹ und X²³ Sauerstoff und X²² eine Einzelbindung oder X²³ Sauerstoff und X²' und X²² eine Einzelbindung oder X²¹ Sauerstoff und X²² und X²³ eine Einzelbindung oder X²¹, X²² und X²³ eine Einzelbindung darstellen, so dass das mit X²¹, X²² und X²³ umgebene Phosphoratom Zentralatom eines Phosphits, Phosphonits, Phosphinits oder Phosphins, vorzugsweise eines Phosphonits, sein kann.

In einer anderen bevorzugten Ausführungsform können X'³ Sauerstoff und X¹¹ und X¹² eine Einzelbindung oder X¹¹ Sauerstoff und X¹² und X¹³ eine Einzelbindung darstellen, so dass das mit X¹¹, X¹² und X¹³ umgebene Phosphoratom Zentralatom eines Phosphonits ist. In einem solchen Fall können X²1, X²² und X²³ Sauerstoff oder X²³ Sauerstoff und X²¹ und X²² eine Einzelbindung oder X²¹ Sauerstoff und X²² und X²³ eine Einzelbindung oder X²¹, X²² und X²³ eine Einzelbindung darstellen, so dass das mit X²¹, X²² und X²³ umgebene Phosphoratom Zentralatom eines Phosphits, Phosphinits oder Phosphins, vorzugsweise eines Phosphinits, sein kann.

In einer anderen bevorzugten Ausführungsform können X¹¹, X¹² und X¹³ eine Einzelbindung darstellen, so dass das mit X¹¹, X¹² und X¹³ umgebene Phosphoratom Zentralatom eines Phosphins ist. In einem solchen Fall können X²¹, X²² und X²³ Sauerstoff oder X²¹, X²² und X²³ eine Einzelbindung darstellen, so dass das mit X²¹, X²² und X²³ umgebene Phosphoratom Zentralatom eines Phosphits oder Phosphins, vorzugsweise eines Phosphins, sein kann.

Als Brückengruppe Y kommen vorzugsweise substituierte, beispielsweise mit C₁-C₄-Alkyl, Halogen, wie Fluor, Chlor, Brom, halogeniertem Alkyl, wie Trifluormethyl, Aryl, wie Phenyl, oder unsubstituerte Arylgruppen in Betracht, vorzugsweise solche mit 6 bis 20 Kohlenstoffatomen im aromatischen System, insbesondere Pyrocatechol, Bis(phenol) oder Bis(naphthol).

Die Reste R¹¹ und R¹² können unabhängig voneinander gleiche oder unterschiedliche organische Reste darstellen. Vorteilhaft kommen als Reste R¹¹ und R¹² Arylreste, vorzugsweise solche mit 6 bis 10 Kohlenstoffatomen, in Betracht, die unsubstituiert oder einfach oder mehrfach substituiert sein können, insbesondere durch C₁-C₄-Alkyl, Halogen, wie Fluor, Chlor, Brom, halogeniertem Alkyl, wie Trifluormethyl, Aryl, wie Phenyl, oder unsubstituierte Arylgruppen.

Die Reste R²' und R²² können unabhängig voneinander gleiche oder unterschiedliche organische Reste darstellen. Vorteilhaft kommen als Reste R²¹ und R²² Arylreste, vorzugsweise solche mit 6 bis 10 Kohlenstoffatomen, in Betracht, die unsubstituiert oder einfach oder mehrfach substituiert sein können, insbesondere durch C₁-C₄-Alkyl, Halogen, wie Fluor, Chlor, Brom, halogeniertem Alkyl, wie Trifluormethyl, Aryl, wie Phenyl, oder unsubstituierte Arylgruppen.

Die Reste R¹¹ und R¹² können einzeln oder verbrückt sein. Auch die Reste R²¹ und R²². können einzeln oder verbrückt sein. Die.Reste R¹¹, R¹², R²¹ und R²² können alle einzeln, zwei verbrückt und zwei einzeln oder alle vier verbrückt sein in der beschriebenen Art.

In einer besonders bevorzugten Ausführungsform kommen die in US 5,723,641 genannten Verbindungen der Formel I, II, III, IV und V in Betracht. In einer besonders bevorzugten Ausführungsform kommen die in US 5,512,696 genannten Verbindungen der Formel 1, 11, III IV, V, VI und VII, insbesondere die dort in den Beispielen 1 bis 31 eingesetzten Verbindungen, in Betracht. In einer besonders bevorzugten Ausführungsform kommen die in US 5,821,378 genannten Verbindungen der Formel I, II, 111, IV, V, VI, VII, VIII, IX, X, XI, XII, XIII, XIV und XV, insbesondere die dort in den Beispielen 1 bis 73 eingesetzten Verbindungen, in Betracht.

In einer besonders bevorzugten Ausführungsform kommen die in US 5,512,695 genannten Verbindungen der Formel I, II, III, IV, V und VI, insbesondere die dort in den Beispielen 1 bis 6 eingesetzten Verbindungen, in Betracht. In einer besonders bevorzugten Ausführungsform kommen die in US 5,981,772 genannten Verbindungen der Formel I, II, III, IV, V, VI, VII, VIII, ix, X, XI, XII, XIII und XIV, insbesondere die dort in den Beispielen 1 bis 66 eingesetzten Verbindungen, in Betracht.

In einer besonders bevorzugten Ausführungsform kommen die in US 6,127,567 genannten Verbindungen und dort in den Beispielen 1 bis 29 eingesetzten Verbindungen in Betracht. In einer besonders bevorzugten Ausführungsform kommen die in US 6,020,516 genannten Verbindungen der Formel I, II, II1, IV, V, VI, VII, VIII, IX und X, insbesondere die dort in den Beispielen 1 bis 33 eingesetzten Verbindungen, in Betracht. In einer besonders bevorzugten Ausführungsform kommen die in US 5,959,135 genannten Verbindungen und dort in den Beispielen 1 bis 13 eingesetzten Verbindungen in Betracht.

In einer besonders bevorzugten Ausführungsform kommen die in US 5,847,191 genannten Verbindungen der Formel-1, I, II und 111.in Betracht. In einer besonders bevorzugten Ausführungsform kommen die in US 5,523,453 genannten Verbindungen, insbesondere die dort in Formel 1, 2, 3, 4, 5, 6, 7, 8, 9, 10, 11, 12, 13, 14, 15, 16, 17, 18, 19, . 20 und 21 dargestellten Verbindungen, in Betracht. In einer besonders bevorzugten Ausführungsform kommen die in WO 01/14392 genannten Verbindungen, vorzugsweise die dort in Formel V, VI, VII, VIII, IX, X, XI, XII, XIII, XIV, XV, XVI, XVII, XXI, XXII, XXIII dargestellten Verbindungen, in Betracht.

In einer besonders bevorzugten Ausführungsform kommen die in WO 98/27054 genannten Verbindungen in Betracht. In einer besonders bevorzugten Ausführungsform kommen die in WO 99/13983 genannten Verbindungen in Betracht. In einer besonders bevorzugten Ausführungsform kommen die in WO 99/64155 genannten Verbindungen in Betracht.

In einer besonders bevorzugten Ausführungsform kommen die in der deutschen Patentanmeldung DE 100 380 37 genannten Verbindungen in Betracht. In einer besonders bevorzugten Ausführungsform kommen die in der deutschen Patentanmeldung DE 100 460 25 genannten Verbindungen in Betracht. In einer besonders bevorzugten Ausführungsform kommen die in der deutschen Patentanmeldung DE 101 502 85 genannten Verbindungen in Betracht.

In einer besonders bevorzugten Ausführungsform kommen die in der deutschen Patentanmeldung DE 101 502 86 genannten Verbindungen in Betracht. In einer besonders bevorzugten Ausführungsform kommen die in der deutschen Patentanmeldung DE 102 071 65 genannten Verbindungen in Betracht. In einer weiteren besonders bevorzugten Ausführungsform der vorliegenden Erfindung kommen die in der US 2003/0100442 A1 genannten phosphorhaltigen Chelatliganden in Betracht.

In einer weiteren besonders bevorzugten Ausführungsform der vorliegenden Erfindung kommen die in der deutschen Patentanmeldung DE 103 50 999 genannten phosphorhaltigen Chelatliganden in Betracht.

Die beschriebenen Verbindungen I, Ia, Ib und II sowie deren Herstellung sind an sich bekannt. Als phosphorhaltiger Ligand können auch Mischungen, enthaltend mindestens zwei der Verbindungen I, Ia, Ib und II, eingesetzt werden.

Bevorzugt sind die phosphorhaltigen Liganden Chelatphosphite oder Chelatphosphonite oder deren Mischungen.

In einer besonders bevorzugten Ausführungsform des erfindungsgemäßen Verfahrens ist der phosphorhaltige Ligand des Nickel(0)-Komplexes und/oder der freie phosphorhaltige Ligand ausgewählt aus Tritolylphosphit, bidentaten phosphorhaltigen Chelatliganden, sowie den Phosphiten der Formel Ib

P(O-R¹)ₓ(O-R²)_{y}(O-R³)_{z}(O-R⁴)ₚ (Ib)

worin R¹, R² und R³ unabhängig voneinander ausgewählt sind aus o-Isopropyl-phenyl, m-Tolyl und p-Tolyl, R⁴ Phenyl ist; x gleich 1 oder 2 ist, und y, z, p unabhängig voneinander 0, 1 oder 2 sind mit der Maßgabe, dass x+y+z+p = 3 ist; und deren Mischungen.

In dem erfindungsgemäßen Verfahren kann der zu verwendende Ligand auch aus einer Ligandlösung stammen, die bereits als Katalysatorlösung in Hydrocyanierungsreaktionen oder Isomerisierungsreaktionen verwendet wurde. Diese als Edukt einsetzbare "Rück-Katalysatorlösung" ist an Nickel(0) abgereichert und hat in der Regel die folgende Zusammensetzung:
- 2 bis 60 Gew.-%, insbesondere 10 bis 40 Gew.-% Pentennitrile,
- 0 bis 60 Gew.-%, insbesondere 0 bis 40 Gew.-% Adipodinitril,
- 0 bis 10 Gew.-%, insbesondere 0 bis 5 Gew.-% andere Nitrile,
- 10 bis 90 Gew.-%, insbesondere 50 bis 90 Gew.-% phosphorhaitiger Ligand und
- 0 bis 2 Gew.-%, insbesondere 0 bis 1 Gew.-% Nickel(0).

Der in der Rück-Katalysatorlösung enthaltene freie Ligand kann zumindest teilweise nach dem erfindungsgemäßen Verfahren somit wieder zu einem Nickel(0)-Komplex umgesetzt werden. Dies wird auch als Regeneration des Katalysators bezeichnet.

### Reduktionsmittel

Das in dem erfindungsgemäßen Verfahren verwendete Reduktionsmittel ist vorzugsweise ausgewählt aus Metallen, die elektropositiver sind als Nickel, Metallalkylen, elektrischem Strom, komplexen Hydriden und Wasserstoff.

Bevorzugt verwendet man als Reduktionsmittel Metalle, die elektropositiver sind als Nickel. Bevorzugt ist dieses Metall vorzugsweise ausgewählt aus der Gruppe bestehend aus Natrium, Lithium, Kalium, Magnesium, Calcium, Barium, Strontium, Titan, Vanadium, Eisen, Kobalt, Kupfer, Zink, Cadmium, Aluminium, Gallium, Indium, Zinn, Blei und Thorium. Besonders bevorzugt sind hierbei Eisen und Zink.

Wird Aluminiummetall als Reduktionsmittel verwendet, so ist es von Vorteil, wenn dieses durch Reaktion mit einer katalytischen Menge Quecksilber(II)-Salz oder Metallalkyl voraktiviert wird. Bevorzugt wird für die Voraktivierung Triethylaluminium oder eine anderes Metallalkyl in einer Menge von vorzugsweise 0,05 bis 50 mol-%, besonders bevorzugt 0,5 bis 10 mol-%, bezogen auf die Aluminiummetallmenge, verwendet.

Die genannten Reduktionsmittel können in Substanz oder gelöst bzw. dispergiert in einem inerten organischen Lösungsmittel, wie Hexan, Heptan oder Toluol, eingesetzt werden.

### Schritt a) der Herstellung der Nickel(0)-Phosphorligand-Komplexe

Erfindungsgemäß wird die Nickel(II)-Verbindung in Gegenwart der phosphorhaltigen Liganden mit dem Reduktionsmittel umgesetzt. Dabei erhält man eine Reaktionsmischung, welche die Nickel(0)-Phosphorligand-Komplexe enthält. Erfindungsgemäß ist das Verfahren dadurch gekennzeichnet, dass die eingangs genannten Bedingungen a) bis d) erfüllt sind. Bedingung a) lautet

### a) bei der Umsetzung beträgt das Molverhältnis Reduktionsmittel : Nickel(II)-Verbindung 1: 1 bis 1000 : 1, gerechnet als molares Verhältnis der Redoxäquivalente.

Die Formulierung "Molverhältnis Reduktionsmittel : Nickel(II)-Verbindung, gerechnet als molares Verhältnis der Redoxäquivalente" sei anhand zweier Beispiele erläutert: Setzt man Zinkmetall als Reduktionsmittel ein, so wird für jedes Ni(II), dass zu Ni(0) reduziert wird, ein Zn(0) zu Zn(II) oxidiert. Soll das Molverhältnis Zinkmetall : Nickel(II)-Verbindung, gerechnet als molares Verhältnis der Redoxäquivalente, beispielsweise 1,5 : 1 betragen, so müssen pro 1 mol Ni(II)-Verbindung 1,5 mol Zinkmetall eingesetzt werden.

Setzt man das komplexe Metallhydrid Lithiumaluminiumhydrid Li⁽¹⁾Al^{(III)}H⁽⁻¹⁾₄ als Reduktionsmittel ein, so werden für jedes Ni(II), dass zu Ni(0) reduziert wird, zwei H(-I) zu H(0) oxidiert. Soll das Molverhältnis Lithiumaluminiumhydrid : Nickel(II)-Verbindung, gerechnet als molares Verhältnis der Redoxäquivalente, wiederum 1,5: 1 betragen, so müssen pro ein mol Ni(II)-Verbindung 3 mol H(-I) eingesetzt werden. 3 mol H(-I) entsprechen ¾mol (0,75 mol) LiAlH₄; pro 1 mol Ni(II)-Verbindung müssen in diesem Beispiel folglich 0,75 mol LiAlH₄ eingesetzt werden.

Bevorzugt beträgt das Molverhältnis Reduktionsmittel : Nickel(II)-Verbindung 1: 1 bis 5:1, wiederum gerechnet als molares Verhältnis der Redoxäquivalente. Insbesondere beträgt dieses Molverhältnis 1 : 1 bis 2: 1. Ein "äquimolares" Molverhältnis von genau 1: 1 kommt insbesondere bei diskontinuierlicher Durchführung des erfindungsgemäßen Verfahrens (Batchfahrweise) in Betracht. Bei kontinuierlicher Durchführung des Verfahrens wird das Reduktionsmittel bevorzugt im Überschuss eingesetzt und das genannte Molverhältnis beträgt vorzugsweise 1,2 : 1 bis 2: 1.

Überraschend wurde gefunden, dass bei der nachfolgenden Extraktion (Schritt d) des erfindungsgemäßen Verfahrens) eine störende Mulmbildung unterbleibt, wenn die bei a) genannten Molverhältnisse eingehalten werden. Unter Mulm wird bei einer Extraktion ein Bereich unvollständiger Phasentrennung zwischen Ober- und Unterphase verstanden, meist ein flüssig/flüssig-Gemisch, in dem auch Feststoffe dispergiert sein können. Übermäßige Mulmbildung ist unerwünscht, da sie die Extraktion behindert und u.U. die Extraktionsvorrichtung vom Mulm geflutet werden kann, wodurch sie ihre Trennaufgabe nicht mehr erfüllen kann. Werden die genannten Molverhältnisse Reduktionsmittel: Ni(II)-Verbindung eingehalten, tritt die erwünschte vollständige Phasentrennung bereits nach kurzer Zeit oder sogar spontan ein.

Das erfindungsgemäße Verfahren wird vorzugsweise in Gegenwart eines Lösungsmittels durchgeführt. Das Lösungsmittel ist dabei insbesondere ausgewählt aus der Gruppe bestehend aus organischen Nitrilen und aromatischen oder aliphatischen Kohlenwasserstoffen. Als organische Nitrile werden vorzugsweise Acetonitril, Propionitril, n-Butyronitril, n-Valeronitril, Cyanocyclopropan, Acrylnitril, Crotonitril, Allylcyanid, cis-2-Pentennitril, trans-2-Pentennitril, cis-3-Pentennitril, trans-3-Pentennitril, 4-Pentennitril, 2-Methyl-3-butennitril, Z-2-Methyl-2-butennitril, E-2-Methyl-2-butennitril, Ethylbernsteinsäuredinitril, Adipodinitril, Methylglutarsäuredinitril oder Mischungen davon verwendet. Als aromatische Kohlenwasserstoffe kommen vorzugsweise Benzol, Toluol, o-Xylol, m-Xylol, p-Xylol oder Mischungen davon in Betracht. Aliphatische Kohlenwasserstoffe können vorzugsweise aus der Gruppe der linearen oder verzweigten aliphatischen Kohlenwasserstoffe, besonders bevorzugt aus der Gruppe der Cycloaliphaten, wie Cyclohexan oder Methylcyclohexan, oder Mischungen davon gewählt werden. Besonders bevorzugt werden cis-3-Pentennitril, trans-3-Pentennitril, Adipodinitril, Methylglutarsäuredinitril oder Mischungen daraus als Lösungsmittel verwendet. Vorzugsweise wird ein chemisch inertes Lösungsmittel verwendet.

Sofern man als Nickel(II)-Verbindung eine durch Azeotropdestillation erhaltene wasserfreie Mischung M enthaltend Nickelhalogenid und ein Verdünnungsmittel einsetzt (dazu siehe weiter oben), kann das Lösungsmittel dieses Verdünnungsmittel sein.

Falls ein Lösungsmittel mitverwendet wird, beträgt seine Menge vorzugsweise 10 bis 90 Gew.-%, besonders bevorzugt 20 bis 70 Gew.-%, insbesondere 30 bis 60 Gew.-%, jeweils bezogen auf die fertige Reaktionsmischung. Der Gehalt des Liganden in dem Lösungsmittel beträgt vorzugsweise 1 bis 90 Gew.-%, besonders bevorzugt 5 bis 80 Gew.-%, insbesondere 50 bis 80 Gew.-%.

Die Temperatur bei der Umsetzung liegt üblicherweise bei 30 bis 140, bevorzugt 40 bis 120 und besonders bevorzugt 50 bis 110°C. Es ist auch möglich, bei höheren Temperaturen zu arbeiten, wobei insbesondere bei der Verwendung von temperaturlabilen Liganden, beispielsweise Chelatliganden (allein oder in Mischung mit anderen Liganden) eine Umsetzung bei niedriger Temperatur empfehlenswert ist.

Der bei der Umsetzung herrschende Druck ist üblicherweise nicht kritisch. Aus praktischen Gründen wählt man beispielsweise Drucke im Bereich von 0,1 bis 5, bevorzugt 0,5 bis 1,5 bar.

Das erfindungsgemäße Verfahren wird vorzugsweise unter Inertgas, beispielsweise Argon oder Stickstoff, durchgeführt. Man kann die Umsetzung diskontinuierlich (Batchfahrweise) oder kontinuierlich in allen dafür geeigneten Reaktoren durchführen. Geeignet sind insbesondere gut durchmischte Reaktoren, in denen die Reaktionsmischung durch Rühren, Umpumpen, Einleiten inerter Gase oder andere übliche Maßnahmen in Bewegung gehalten wird.

### Optionale Reduktionsmittelabtrennung und optionale Behandlung mit Ammoniak oder Amin

Sofern das Reduktionsmittel nicht äquimolar - also im Molverhältnis 1:1 zur Nickel(II)-Verbindung, gerechnet als Redoxäquivalente, siehe oben - eingesetzt wurde, liegt nach der Umsetzung in der Reaktionsmischung ein Überschuss an Reduktionsmittel vor. Dieser Reduktionsmittelüberschuss kann aus der Reaktionsmischung abgetrennt werden, falls gewünscht.

Zur Feststoffabtrennung kann man übliche Verfahren verwenden, beispielsweise Filtration, Querstromfiltration, Zentrifugation, Sedimentation, Klassierung oder Dekantieren, wozu gängige Vorrichtungen wie Filter (z.B. Bandfilter), Zentrifugen, Hydrocyclone oder andere Klassierapparate bzw. Dekanter eingesetzt werden können. Bei einer Abtrennung durch Sedimentation kann man den sedimentierten Reduktionsmittelüberschuss im Reaktor belassen und bei einer Regenerierung verwenden. Bei einer Abtrennung durch Bandfilter, Hydrocyclone oder ähnliche Vorrichtungen kann man den abgetrennten Reduktionsmittelüberschuss teilweise oder vollständig unmittelbar in das Verfahren zurückführen.

Temperatur und Druck bei der optionalen Feststoffabtrennung sind üblicherweise nicht kritisch. Beispielsweise kann man in den weiter oben genannten Temperatur- bzw. Druckbereichen arbeiten. Insbesondere empfiehlt sich die Einhaltung der o.g. Temperaturbedingungen bei Verwendung temperaturlabiler Liganden oder bei der Gefahr der Ni(0)-Abscheidung wie z.B. in der erwähnten WO 2004/101498 A2 beschrieben.

Die Metalle die als Reduktionsmittel eingesetzt werden, werden zu Metallverbindungen oxidiert, die als Lewissäure wirken können, beispielsweise Zinkchlorid, Eisen(II)chlorid oder Zinkbromid. Sofern gewünscht, kann man die erhaltene Reaktionsmischung mit Ammoniak oder einem primären, sekundären oder tertiären aromatischen, alkylaromatischen, aliphatischen oder cycloaliphatischen Amin umsetzen. Dabei bilden die lewissauren Metallverbindungen schwerlösliche Addukte, die anschließend abgetrennt werden können. Beispielsweise entsteht aus ZnCl₂ und Ammoniak schwerlösliches ZnCl₂ • 2 NH₃. Diese Ausgestaltung hat den Vorteil, dass im nachfolgenden Extraktionsschritt d) weniger Lewissäure abgetrennt werden muss.

Als Amine verwendet man Monoamine, Diamine, Triamine oder höherfunktionelle Amine (Polyamine). Die Monoamine weisen üblicherweise Alkylreste, Arylreste oder Arylalkylreste mit 1 bis 30 C-Atomen auf; geeignete Monoamine sind z.B. primäre Amine, z.B. Monoalkylamine, sekundäre oder tertiäre Amine, z.B. Dialkylamine. Geeignete primäre Monoamine sind beispielsweise Butylamin, Cyclohexylamin, 2-Methylcyclohexylamin, 3-Methylcyclohexylamin, 4-Methylcyclohexylamin, Hexylamin, Pentylamin, Benzylamin, Tetrahydrofurfurylamin und Furfurylamin. Als sekundäre Monoamine kommen z.B. Diethylamin, Dibutylamin, Di-n-propylamin und N-Methylbenzylamin in Betracht. Als tertiäre Amine eignen sich beispielsweise Trialkylamine mit C₁₋₁₀-Alkylresten, wie Trimethylamin, Triethylamin oder Tributylamin.

Als Diamine eignen sich z.B. solche der Formel R¹-NH-R²-NH-R³, worin R¹, R² und R³ unabhängig voneinander Wasserstoff oder einen Alkylrest, Arylrest oder Arylalkylrest mit 1 bis 20 C-Atomen bedeuten. Der Alkylrest kann linear oder insbesondere für R² auch cyclisch sein. Geeignete Diamine sind beispielsweise Ethylendiamin, die Propylendiamine (1,2-Diaminopropan und 1,3-Diaminopropan), N-Methyl-ethylendiamin, Piperazin, Tetramethylendiamin (1,4-Diaminobutan), N,N'-Dimethylethylendiamin, N-Ethylethylendiamin, 1,5-Diaminopentan, 1,3-Diamino-2,2-diethylpropan, 1,3-Bis-(methylamino)propan, Hexamethylendiamin (1,6-Diaminohexan), 1,5-Diamino-2-methylpentan, 3-(Propylamino)-propylamin, N,N'-Bis-(3-aminopropyl)-piperazin, N,N'-Bis-(3-aminopropyl)-piperazin und Isophorondiamin (IPDA). Als Triamine, Tetramine bzw. höherfunktionelle Amine eignen sich z.B. Tris(2-aminoethyl)amin, Tris(2-amino-propyl)amin, Diethylentriamin (DETA), Triethylentetramin (TETA), Tetraethylenpentamin (TEPA), Isopropylentriamin, Dipropylentriamin und N,N'-bis(3-aminopropyl-ethylendiamin). Aminobenzylamine und Aminohydrazide mit zwei oder mehr Aminogruppen sind ebenfalls geeignet.

Naturgemäß kann man auch Mischungen von Ammoniak mit einem oder mehreren Aminen, oder Mischungen mehrerer Amine verwenden. Bevorzugt verwendet man Ammoniak oder aliphatische Amine, insbesondere Trialkylamine mit 1 bis 10 C-Atomen im Alkylrest, z.B. Trimethylamin, Triethylamin oder Tributylamin, sowie Diamine wie Ethylendiamin, Hexamehtylendiamin oder 1,5-Diamino-2-methylpentan.

Die Menge des Ammoniaks bzw. Amins, sofern mitverwendet, richtet sich u.a. nach Art und Menge des Nickel(0)-Katalysators und/oder der Liganden. Die Obergrenze dieses Molverhältnisses ist in der Regel unkritisch und beträgt beispielsweise 100 : 1; der Überschuss an Ammoniak bzw. Amin sollte jedoch nicht so groß sein, dass sich der Ni(0)-Komplex bzw. dessen Liganden zersetzen. Die Temperatur bei der Behandlung mit Ammoniak bzw. Amin ist üblicherweise nicht kritisch und beträgt beispielsweise 10 bis 140, bevorzugt 20 bis 100 und insbesondere 20 bis 90°C. Auch der Druck ist in der Regel nicht kritisch.

Der Ammoniak bzw. das Amin kann dem Reaktionsaustrag gasförmig, flüssig (unter Druck stehend) oder gelöst in einem Lösungsmittel zugegeben werden. Als Lösungsmittel eignen sich z.B. Nitrile, insbesondere solche, die bei der Hydrocyanierung vorliegen, und weiterhin aliphatische, cycloaliphatische oder aromatische Kohlenwasserstoffe, wie man sie bei dem erfindungsgemäßen Verfahren als Extraktionsmittel verwendet, beispielsweise Cyclohexan, Methylcyclohexan, n-Heptan oder n-Octan.

Die optionale Ammoniak- bzw. Aminzugabe erfolgt in üblichen Vorrichtungen, beispielsweise solchen zur Gaseinleitung oder in Flüssigkeitsmischern. Der dabei in vielen Fällen ausfallende Feststoff kann entweder im Reaktionsaustrag verbleiben, d.h. der Extraktion in Schritt b) wird eine Suspension zugeführt, oder in üblicher Weise abgetrennt werden, beispielsweise wie es vorstehend für die Abtrennung überschüssigen Reduktionsmittels beschrieben wurde.

### Bedingungen b) und c) bei der Umsetzung

Bei dem erfindungsgemäßen Verfahren müssen außerdem die Bedingungen b) und c) erfüllt sein:
b) bei der Umsetzung (der Nickel(II)-Verbindung mit dem Reduktionsmittel in Gegenwart des Liganden) beträgt das Molverhältnis phosphorhaltiger Ligand : Nickel(II)-Verbindung, gerechnet als molares Verhältnis P-Atome : Ni-Atome, maximal 30 : 1, und
c) in der erhaltenen Reaktionsmischung beträgt der Nickel(0)-Gehalt maximal 1,3 Gew.-%.

Gemäß Bedingung b) liegt das Molverhältnis phosphorhaltiger Ligand : Nickel(II)-Verbindung bei 30 : 1 oder darunter. Dabei wird der phosphorhaltige Ligand als Anzahl Phosphoratome ausgedrückt. Unter dem Begriff "phosphorhaltiger Ligand" der Bedingung b) wird die Gesamtheit aller phosphorhaltigen Liganden, nämlich ein- und mehrzänige, z.B. monodentate und bidentate Liganden, verstanden. Die Nickel(II)-Verbindung wird als Anzahl Nickel(II)-Atome ausgedrückt. Der Ausdruck "Molverhältnis phosphorhaltiger Ligand : Nickel(II)-Verbindung, gerechnet als molares Verhältnis P-Atome: Ni-Atome" ist demnach verkürzt ausgedrückt das Atomverhältnis P : Ni.

Bezüglich Bedingung b) beträgt das genannte Molverhältnis (P : Ni) bevorzugt maximal 25 :1, insbesondere maximal 20: 1. Ebenfalls bevorzugt beträgt es mindestens 5:1.

Betreffend Bedingung c) beträgt der Nickel(0)-Gehalt in der erhaltenen Reaktionsmischung bevorzugt maximal 1,0 Gew.-%. Ebenso bevorzugt beträgt er mindestens 0,1 Gew.-%.

Ebenfalls besonders bevorzugt beträgt das molare Verhältnis der Nickel(II)-Verbindung zu phosphorhaltigem einzähnigem oder phosphorhaltigem mehrzähnigem Ligand, jeweils 1: 1 bis 1 : 100, bevorzugt 1 : 2 bis 1: 50 und insbesondere 1 : 4 bis 1 : 20. Dieses Verhältnis bezieht sich also nicht - wie die Bedingung b) - auf die Gesamtheit aller phosphorhaltigen Liganden, sondern entweder.ausschließlich auf die einzähnigen oder ausschließlich auf die mehrzähnigen Liganden.

### Schritt d) der Herstellung der Nickel(0)-Phosphorligand-Komplexe

Das erfindungsgemäße Verfahren ist weiterhin dadurch gekennzeichnet,

### d) dass die bei der Umsetzung erhaltene Reaktionsmischung extrahiert wird, indem man mindestens ein Dinitril und mindestens einen Kohlenwasserstoff zufügt, wobei sich mindestens zwei nichtmischbare Phasen bilden.

Aus der in Schritt d) zu extrahierenden Reaktionsmischung kann vor der Extraktion überschüssiges Reduktionsmittel abgetrennt werden, wie oben beschrieben. Zusätzlich oder alternativ kann die zu extrahierende Reaktionsmischung vor der Extraktion mit Ammoniak oder Amin behandelt werden und schwerlösliche Lewissäure-Addukte ggf. abgetrennt werden wie oben beschrieben.

Als Dinitril eignen sich bevorzugt C₆-Dinitrile, insbesondere bevorzugt Adipodinitril, 2-Methylglutarsäuredinitril, 2-Ethylbernsteinsäuredinitril, 2,3-Dimethylbernsteinsäuredinitril oder deren Mischungen. Adipodinitril ist besonders bevorzugt.

Der Kohlenwasserstoff ist das Extraktionsmittel. Er weist üblicherweise einen Siedepunkt von mindestens 30°C, bevorzugt mindestens 60°C, insbesondere mindestens 90°C, und üblicherweise höchstens 140°C, bevorzugt höchstens 135°C, insbesondere höchstens 130°C auf, jeweils bei einem Druck von 10⁵ Pa absolut.

Geeignete Kohlenwasserstoffe sind beispielsweise in US 3,773,809, Spalte 3, Zeile 50-62, beschrieben. Vorzugsweise kommt ein Kohlenwasserstoff, ausgewählt aus Cyclohexan, Methylcyclohexan, Cycloheptan, n-Hexan, n-Heptan, isomeren Heptanen, n-Octan, iso-Octan, isomeren Octanen wie 2,2,4-Trimethylpentan, cis- und trans-Decalin oder deren Gemische, insbesondere aus Cyclohexan, Methylcyclohexan, n-Heptan, isomeren Heptanen, n-Octan, isomeren Octanen wie 2,2,4-Trimethylpentan, oder deren Gemische, in Betracht. Besonders bevorzugt verwendet man Cyclohexan, Methylcyclohexan, n-Heptan oder n-Octan.

Ganz besonders bevorzugt sind n-Heptan oder n-Octan. Bei diesen Kohlenwasserstoffen ist die unerwünschte Mulmbildung besonders gering.

Der verwendete Kohlenwasserstoff ist vorzugsweise wasserfrei, wobei wasserfrei einen Wassergehalt von unter 100, vorzugsweise unter 50, insbesondere unter 10 ppm by weight bedeutet. Der Kohlenwasserstoff kann durch geeignete, dem Fachmann bekannte Verfahren getrocknet werden, beispielsweise durch Adsorption oder Azeotropdestillation. Die Trocknung kann in einem dem Extraktionsschritt d) vorgeschalteten Schritt erfolgen.

Die Mengen des in Schritt d) zugefügten Dinitrils bzw. Kohlenwasserstoffs sind derart zu wählen, dass eine Phasentrennung erfolgt. Geeignete Mengen können ggf. durch einfache Vorversuche ermittelt werden. Bevorzugt hält man die Menge des zugefügten Dinitrils möglichst gering, und besonders bevorzugt wird gerade so viel Dinitril zugefügt wie erforderlich ist, um eine Phasentrennung zu erzielen.

Man kann die Extraktion diskontinuierlich (Batchfahrweise) oder kontinuierlich in allen dafür geeigneten Vorrichtungen durchführen. Bei kontinuierlicher Durchführung des Verfahrens sollte nach Zugabe des Dinitrils der Gehalt der Reaktionsmischung an Dinitrilen in der Regel größer als 50 Gew.-%, bevorzugt größer als 70 Gew.-% sein. Verfahren zur Herstellung von Dinitrilen, insbesondere C₆-Dinitrilen sind an sich bekannt. Ein mögliches solches Verfahren ist in der DE-A-10 2004 004683 beschrieben.

Bei der Extraktion bildet sich in der Regel bei einer Temperatur T eine erste Phase, die gegenüber der zu extrahierenden Reaktionsmischung - dies ist bei kontinuierlicher Extraktion der Zulauf - an den genannten Ni(0)-Komplexen bzw. Liganden angereichert ist, und eine zweite Phase, die gegenüber der zu extrahierenden Reaktionsmischung (dem Zulauf) an Dinitrilen angereichert ist. Zumeist ist die erste Phase die leichtere Phase, also die Oberphase, und die zweite Phase die schwerere Phase, also die Unterphase.

Die Oberphase enthält nach der Phasentrennung üblicherweise zwischen 50 und 99 Gew.-%, bevorzugt zwischen 60 und 97 Gew.%, insbesondere zwischen 80 und 95 Gew.-%, des zur Extraktion eingesetzten Kohlenwasserstoffes. Folglich ist die Oberphase in der Regel die Kohlenwasserstoffphase und die Unterphase die Dinitrilphase.

Der Nickel(0)-Phosphorligand-Komplex verteilt sich während der Extraktion entsprechend dem Verteilungsgleichgewicht auf beide Phasen. Um bei kontinuierlicher Ausgestaltung des Verfahrens die Verluste an Nickel(0)-Phosphorligand-Komplex zu vermindern, kann man den Kohlenwasserstoff an einer Zulaufstelle zugeben, die näher zur Ablaufstelle der Unterphase (Dinitrilphase) liegt als zur Zulaufstelle der Reaktionsmischung. Die Zulaufstelle des Dinitrils liegt vorzugsweise näher zur Ablaufstelle der Oberphase (Kohlenwasserstoffphase) als die Zulaufstelle der Reaktionsmischung.

Hierbei ist "näher" im Sinn der Anzahl der theoretischen Trennstufen zwischen zwei Punkten zu verstehen. Zwischen den Zulaufstellen der Reaktionsmischung und des Kohlenwasserstoffs liegen in der Regel 0 bis 10, bevorzugt 1 bis 7 theoretische Extraktions-(Trenn-)stufen (Rückextraktionszone für den Katalysator); zwischen den Zulaufstellen der Reaktionsmischung und des Dinitrils liegen in der Regel 1 bis 10, bevorzugt 1 bis 5 theoretische Extraktions-(Trenn-)stufen. Die genannten bevorzugten Stufenzahlen ergeben sich aus ökonomischen Überlegungen; prinzipiell sind auch höhere Stufenzahlen möglich und zur Erzielung einer besseren Abtrennung ggf. sinnvoll.

Die Lewissäure, die in der zu extrahierenden Reaktionsmischung enthalten ist, verbleibt vorzugsweise größtenteils und besonders bevorzugt vollständig in der Unterphase. Hier bedeutet vollständig, dass die Restkonzentration der Lewissäure in der Oberphase vorzugsweise kleiner als 1 Gew.-%, besonders bevorzugt kleiner als 0,5 Gew.-%, insbesondere kleiner als 500 ppm by weight ist.

Die Unterphase der Extraktion kann in geeigneter Weise aufbereitet werden, so dass die darin enthaltenen Dinitrile wieder als Zulauf zur Extraktion eingesetzt werden können. Eine solche Aufarbeitung kann z.B. destillativ erfolgen, wie in der DE-A 10 2004 004683 bei Strom 7 aus Schritt c) beschrieben.

Für die Extraktion kann man beispielsweise eine Gegenstromextraktionskolonne verwenden, die eine Rückextraktionszone aufweisen kann. Es sind jedoch auch gleichartig wirkende Kombinationen üblicher, dem Fachmann bekannten Vorrichtungen, geeignet, z.B. Gegenstrom-Extraktionskolonnen, Mixer-Settler-Kaskaden oder Kombinationen von Mixer-Settler-Kaskaden mit Kolonnen. Man kann auch zwei oder mehr Gegenstrom-Extraktionskolonnen in Serie schalten. Besonders bevorzugt ist die Verwendung von Gegenstrom-Extraktionskolonnen, die insbesondere mit Blechpackungen als dispergierende Elemente ausgestattet sind. In einer weiteren besonders bevorzugten Ausführungsform wird die Extraktion im Gegenstrom in kompartimentierten, gerührten Extraktionskolonnen ausgeführt.

Betreffend die Dispergierrichtung wird bevorzugt der Kohlenwasserstoff als kontinuierliche Phase und die zu extrahierende Reaktionsmischung als disperse Phase eingesetzt. Dies verkürzt in der Regel die Phasentrennzeit und vermindert die Mulmbildung. Jedoch ist auch die umgekehrte Dispergierrichtung, also zu extrahierende Reaktionsmischung als kontinuierliche und Kohlenwasserstoff als disperse Phase, möglich. Letzteres gilt insbesondere dann, wenn die Mulmbildung durch vorherige Feststoffabtrennung (siehe oben), höhere Temperatur bei der Extraktion bzw. Phasentrennung oder Verwendung eines geeigneten Kohlenwasserstoffs reduziert oder vollständig unterdrückt wird. Üblicherweise wählt man die für die Trennleistung der Extraktionsvorrichtung günstigere Dispergierrichtung.

In der Extraktion wird ein Phasehverhältnis von in der Regel 0,1 bis 10, besonders bevorzugt 0,4 bis 3,5, insbesondere 0,75 bis 2,5, jeweils berechnet als Verhältnis von Masse des zugeführten Kohlenwasserstoffs zu Masse der zu extrahierenden Reaktionsmischung, verwendet.

Der Druck während der Extraktion beträgt üblicherweise 10 kPa bis 1 MPa, bevorzugt 50 kPa bis 0,5 MPa, insbesondere 75 kPa bis 0,25 MPa.

Die Extraktion wird zweckmäßigerweise bei einer Temperatur von -15 bis 120°C, insbesondere 20 bis 100°C und besonders bevorzugt 30 bis 80°C durchgeführt. Es wurde gefunden, dass bei höherer Temperatur der Extraktion die Mulmbildung geringer ist.

Die Phasentrennung kann räumlich und zeitlich je nach apparativer Ausgestaltung als letzter Teil der Extraktion betrachtet werden. Zur Phasentrennung kann üblicherweise ein weiter Druck-, Konzentrations- und Temperaturbereich gewählt werden, wobei die für die jeweilige Zusammensetzung der Reaktionsmischung optimalen Parameter leicht durch wenige einfache Vorversuche ermittelt werden können.

Die Temperatur T bei der Phasentrennung beträgt üblicherweise mindestens 0°C, vorzugsweise mindestens 10°C, besonders bevorzugt mindestens 20°C. Üblicherweise beträgt sie höchstens 120°C, vorzugsweise höchstens 100°C, besonders bevorzugt höchstens 95°C. Beispielsweise führt man die Phasentrennung bei 0 bis 100°C, bevorzugt 30 bis 80°C durch.

Der Druck bei der Phasentrennung liegt in der Regel bei mindestens 1 kPa, vorzugsweise mindestens 10 kPa, besonders bevorzugt 20 kPa. In der Regel beträgt er höchstens 2 MPa, vorzugsweise höchstens 1 MPa, besonders bevorzugt höchstens 0,5 MPa.

Die Phasentrennzeit, also die Zeitspanne nach der Vermischung der zu extrahierenden Reaktionsmischung mit dem Kohlenwasserstoff (Extraktionsmittel) bis zur Ausbildung einer einheitlichen Oberphase und einer einheitlichen Unterphase, kann in weiten Grenzen variieren. Die Phasentrennzeit beträgt in der Regel 0,1 bis 60, bevorzugt 1 bis 30 und insbesondere 2 bis 10 min. Bei großtechnischer Durchführung des erfindungsgemäßen Verfahrens ist üblicherweise eine Phasentrennzeit von maximal 15, insbesondere maximal 10 min technisch und ökonomisch sinnvoll.

Es wurde gefunden, dass sich die Phasentrennzeit insbesondere bei Verwendung langkettiger aliphatischer Alkane wie n-Heptan oder n-Octan als Kohlenwasserstoff in vorteilhafter Weise vermindert.

Die Phasentrennung kann in einer oder mehreren dem Fachmann für solche Phasentrennungen bekannten Vorrichtungen durchgeführt werden. In einer vorteilhaften Ausführungsform kann man die Phasentrennung in der Extraktionsvorrichtung durchführen, beispielsweise in einer oder mehreren Mixer-Settler-Kombinationen oder durch Ausstattung einer Extraktionskolonne mit einer Beruhigungszone.

Bei der Phasentrennung erhäft man zwei flüssige Phasen, von denen eine Phase einen höheren Anteil an dem Nickel(0)-Komplex mit phosphorhaltigen Liganden und/oder freien phosphorhaltigen Liganden, bezogen auf das Gesamtgewicht dieser Phase, aufweist als die andere Phase. Die andere Phase ist angereichert an Lewissäuren. Die mit dem Nickel(0)-Komplex bzw. den Liganden angereicherte Phase ist üblicherweise die leichtere Phase (Kohlenwasserstoffphase); die mit Lewissäuren angereicherte Phase ist in der Regel die schwerere Phase (Dinitrilphase).

In der Regel trennt man nach erfolgter Phasentrennung die obere von der unteren Phase ab. Bei kontinuierlicher Ausgestaltung erfolgt dies in einfacher Weise, indem jede der Phasen durch eine eigene Ablaufstelle abgezogen wird. Bevorzugt ist das Verfahren dadurch gekennzeichnet, dass man diejenige Phase, worin die Nickel(0)-Phosphorligand-Komplexe gegenüber der Reaktionsmischung angereichert sind, abtrennt.

### Mischungen enthaltend Nickel(0)-Komplexe und ihre Verwendung

Die mit dem erfindungsgemäßen Verfahren erhältlichen Mischungen, enthaltend die beschriebenen Nickel(0)-Phosphorligand-Komplexe. Darüber hinaus können die Mischungen beispielsweise freie phosphorhaltige Liganden enthalten.

Der Nickel(0)-Phosphodigand-Komplex kann unmittelbar in Form der nach der Extraktion und Phasentrennung abgetrennten Phase, also gelöst bzw. dispergiert im Kohlenwasserstoff, verwendet werden. Diese Phase ist eine Mischung im Sinne des vorherigen Absatzes.

Alternativ kann der Nickel(0)-komplex als solcher eingesetzt werden, wozu man ihn aus der erhaltenen Lösung bzw. Dispersion abtrennt. Die Abtrennung erfolgt, indem man das Lösungsmittel bzw. Dispersionsmittel (den Kohlenwasserstoff) in üblicher Weise entfernt, beispielsweise durch Destillation oder andere Trennverfahren. Sofern der Nickel(0)-Komplex als Feststoff vorliegt, kann man ihn auch durch die weiter oben beschriebenen Verfahren zur Feststoffabtrennung abtrennen.

Bevorzugt wird beim Abtrennen des zur Extraktion verwendeten Kohlenwasserstoffs, z.B. durch Abdestillierten, ein Verdünnungsmittel zugegeben, das einen höheren Siedepunkt aufweist als der Kohlenwasserstoff. Dieses Verdünnungsmittel hält den im Destillationssumpf zurückbleibenden Katalysator in Lösung und ist bevorzugt ausgewählt aus der Gruppe enthaltend Pentennitril-Isomere und Dinitrile. Besonders bevorzugt als Verdünnungsmittel sind die Isomere des Pentennitrils, insbesondere 4-Pentennitril, trans-3-Pentennitril, cis-3-Pentennitril, cis 2-Pentennitril und trans-2-Pentennitril.

Die erfindungsgemäßen, den Nickel(0)-Komplex enthaltenden Mischungen können vorzugsweise verwendet werden als Katalysator in der Hydrocyanierung und Isomerisierung von Alkenen oder in der Hydrocyanierung und Isomerisierung von ungesättigten Nitrilen. Diese Verwendung ist ebenfalls Gegenstand der Erfindung.

Bevorzugt können die Mischungen in der erwähnten Hydrocyanierung von Butadien zu Pentennitrilen verwendet werden. Demnach ist die genannte Verwendung bevorzugt dadurch gekennzeichnet, dass das Alken 1,3-Butadien ist und zu Pentennitrilen hydrocyaniert wird. Die Hydrocyanierung kann beispielsweise gemäß dem in der genannten WO 2005/073171 A1 beschriebenen Verfahren erfolgen; oder gemäß dem in der WO 2005/073174 A1 offenbarten Verfahren, bei dem die Hydrocyanierung durch einen gemeinsamen Katalysatorkreis mit einer Isomerisierung gekoppelt ist.

Ebenso Bevorzugt können die Mischungen in der erwähnten Isomerisierung von 2-Methyl-3-Pentennitril zu 3-Pentennitril verwendet werden. Folglich ist die genannte Verwendung bevorzugt dadurch gekennzeichnet, dass das ungesättigte Nitril 2-Methyl-3-butennitril ist und zu linearem 3-Pentennitril isomerisiert wird.

### Verfahren zur Isomerisierung verzweigter Nitrile

Es gibt zwei verwandte Verfahren zur Isomerisierung (Isomerisierungsverfahren) von verzweigten ungesättigten Nitrilen zu linearen ungesättigten Nitrilen in Gegenwart von Nickel(0)-Phosphorligand-Komplexen als Katalysator.

Das erste Isomerisierungsverfahren ist dadurch gekennzeichnet, dass man die Nickel(0)-Phosphorligand-Komplexe nach dem erfindungsgemäßen Verfahren zur Herstellung der Nickel(0)-Phosphorligand-Komplexe herstellt.

Das (erste) Verfahren zur Isomerisierung von verzweigten ungesättigten Nitrilen zu linearen ungesättigten Nitrilen in Gegenwart von Nickel(0)-Phosphorligand-Komplexen als Katalysator ist dadurch gekennzeichnet, dass man die Nickel(0)-Phosphodigand-Komplexe nach dem weiter oben beschriebenen Verfahren (Verfahren der Ansprüche 1 bis 10) herstellt.

Wesentlicher Bestandteil dieses ersten Isomerisierungsverfahrens ist der weiter oben beschriebene Extraktionsschritt d).

Das zweite Isomerisierungsverfahren ist dadurch gekennzeichnet, dass man die Nickel(0)-Phosphorligand-Komplexe bei der Durchführung des Isomerisierungsverfahrens in Kreislauffahrweise regenieriert. Die Regeneration wurde weiter oben bereits erwähnt.

Das (zweite) Verfahren zur Isomerisierung von verzweigten ungesättigten Nitrilen zu linearen ungesättigten Nitrilen in Gegenwart von Nickel(0)-Phosphorligand-Komplexen als Katalysator ist dadurch gekennzeichnet, dass man die Nickel(0)-Phospholigand-Komplexe bei der Durchführung dieses Verfahrens (also des Verfahrens zur Isomerisierung) in Kreislauffahrweise regenieriert.

Bevorzugt ist dieses (zweite) Isomerisierungsverfahren dadurch gekennzeichnet, dass es einen Extraktionsschritt aufweist wie weiter oben als Schritt d) beschrieben.

Demnach weisen beide Isomerisierungsverfahren einen Extraktionsschritt d) auf. Bevorzugt wird Schritt d) bei beiden Isomerisierungsverfahren derart ausgestaltet, dass bei der Herstellung bzw. Regenerierung des Nickel(0)-Katalysators nicht nur die Lewissäure abgetrennt wird, sondern auch bestimmte andere unerwünschte Verbindungen, welche bei der Isomerisierung eine Fehlaktivität verursachen, abgetrennt werden. Diese unerwünschten Verbindungen werden nachfolgend als Störverbindungen bezeichnet.

Bei beiden Isomerisierungsverfahren hat es sich als vorteilhaft erwiesen, bei kontinuierlicher Durchführung des Extraktionsschrittes d) bereits dem Zulauf (also der Reaktionsmischung) eine Teilmenge des zur Extraktion verwendeten Kohlenwasserstoffs zuzufügen. Dies wird nachfolgend als Voreinmischung bezeichnet.

Durch die Voreinmischung wird die Viskosität des Zulaufs vermindert, was die Extraktion erleichtert. Die Teilmenge des bei der Voreinmischung zudosierten Kohlenwasserstoffs beträgt beispielsweise 3 bis 40, insbesondere 5 bis 20 Gew.-% der bei Voreinmischung und Extraktion insgesamt verwendeten Kohlenwasserstoffmenge.

Der Extraktionsschritt in beiden Isomerisierungsverfahren kann in den weiter oben genannten Vorrichtungen, beispielsweise Extraktionskolonnen, vorgenommen werden. Bevorzugt verwendet man gerührte Kolonnen. Betreffend die Dispergierrichtung wird bevorzugt der Kohlenwasserstoff als kontinuierliche Phase und die zu extrahierende Reaktionsmischung als disperse Phase eingesetzt. Jedoch ist auch die umgekehrte Dispergierrichtung, also zu extrahierende Reaktionsmischung als kontinuierliche und Kohlenwasserstoff als disperse Phase, möglich, jedoch nicht bevorzugt.

Die im Extraktionsschritt d) beider Isomerisierungsverfahren zu extrahierende Reaktionsmischung kann auch eine Mischung sein, die eine (weiter oben beschriebene) Rück-Katalysatorlösung und eine Lösung des frisch hergestellten bzw. regenerierten Katalysators enthält. Das Mischungsverhältnis Rück-Katalysatorlösung : Lösung des frischen bzw. regenerierten Katalysators beträgt beispielsweise 99 : 1 bis 0,5 : 1, bevorzugt 95 : 1 bis 1 : 1, gerechnet als Masse der Lösung.

Bevorzugt wird beim Extraktionsschritt der Isomerisierungsverfahren der Gehalt an Pentennitrilen in der zu extrahierenden Mischung (dies ist der Zulauf), möglichst gering gehalten. Beispielsweise beträgt er maximal 5 Gew.-% der zu extrahierenden Mischung (des Zulaufs).

Beim Extraktionsschritt beider Isomerisierungsverfahren liegen zwischen den Zulaufstellen der Reaktionsmischung und des Kohlenwasserstoffs in der Regel 1 bis 10, bevorzugt 2 bis 7 theoretische Extraktions-(Trenn-)stufen (Rückextraktionszone für den Katalysator); zwischen den Zulaufstellen der Reaktionsmischung und des Dinitrils liegen in der Regel 1 bis 10, bevorzugt 2 bis 5 theoretische Extraktions-(Trenn-)stufen. Wie weiter oben bereits erwähnt, sind die genannten bevorzugten Stufenzahlen ökonomisch vorteilhaft, jedoch können auch höhere Stufenzahlen sinnvoll sein.

Die Störverbindungen reichern sich unter den vorstehend beschriebenen Extraktionsbedingungen ebenso wie die Lewissäure in der unteren Phase (Dinitrilphase) an und können auf diese Weise gemeinsam abgetrennt werden, d.h. es ist kein zusätzlicher Verfahrensschritt zur Abtrennung der Störverbindungen erforderlich.

Beide genannten Isomerisierungsverfahren eignen sich insbesondere zur Isomerisierung von 2-Methyl-3-pentennitril zu linearem 3-Pentennitril. Demnach sind beide Isomerisierungsverfahren insbesondere dadurch gekennzeichnet, dass man 2-Methyl-3-butennitril zu linearem 3-Pentennitril isomerisiert. Bevorzugt werden dabei die Störverbindungen zusammen mit der Lewissäure abgetrennt.

### Vorteile der Erfindung

Mit dem erfindungsgemäßen Verfahren zur Herstellung von Nickel(0)-Phosphorligand-Komplexen lassen sich auf einfache Weise Mischungen enthaltend die Komplexe herstellen, wobei die Mischungen keine Lewissäuren enthalten. Der Lewissäure-freie Katalysator kann besonders vorteilhaft bei der Hydrocyanierungsreaktionen und Isomerisierungsreaktionen eingesetzt werden.

Im Extraktionsschritt d) wird ein Teil des Nickel(0)-Katalysators zurückgewonnen und kann bei Kreisfahrweise wieder in die Hydrocyanierung und/oder Isomerisierung zurückgeführt werden. Durch diese Rückführung können Katalysatorverluste durch Zersetzung des Katalysators, wie sie bei höherer Reaktionstemperatur der Hydrocyanierung bzw. Isomerisierung vermehrt auftreten kann, ausgeglichen werden. Dies erlaubt es, die Hydrocyanierung bzw. Isomerisierung bei höherer Temperatur durchzuführen. Dadurch erhöht sich die Reaktionsgeschwindigkeit und die Raum-Zeit-Ausbeute, weshalb deutlich kleinere Reaktoren eingesetzt werden können.

Mit den Verfahren zur Isomerisierung verzweigter Nitrile lassen sich bei geeigneter Ausgestaltung der Extraktion auch die Störkomponenten ohne zusätzlichen Aufwand zusammen mit den Lewissäuren entfernen.

### Beispiele

### 1 ) Herstellung der Nickel(II)-Quelle: wasserfreies Nickelchlorid durch Azeotropdestillation

In einem mit Rührer und Wasserauskreiser versehenen 2000 ml-Rundkolben wurde eine Lösung von 30 g Nickelchlorid-Hexahydrat (NiCl₂ • 6 H₂O) in 60 g Wasser mit 424 ml 3-Pentennitril versetzt. Die zweiphasige Mischung wurde unter Rückfluss zum Sieden erhitzt und dabei das Wasser ausgekreist. Man erhielt eine wasserfreie, feinteilige Suspension von wasserfreiem Nickelchlorid in 3-Pentennitril mit einem Nickelchloridgehatt von 3,85 Gew.-% NiCl₂.

### 2) Herstellung des Nickel(0)-Phosphorligand-Komplexes

In einem 500 ml-Rundkolben, der mit Rührer und Rückflusskühler versehen war und kontinuierlich mit Argongas gespült wurde, legte man 101 g der unter A) erhaltenen Nickelchlorid-Suspension (entsprechend 30 mmol NiCl₂) vor und gab 198 g (540 mmol) Tritolylphosphit hinzu, sodass das Molverhältnis P : Ni gleich 18: 1 war. Anschließend wurde unter Rühren auf 80°C erwärmt, die in der Tabelle genannte Menge Zink-Pulver zugefügt und die Reaktionsmischung 3,5 Stunden bei 80°C gerührt.

Nach dem Abkühlen auf 25°C bestimmte man an einer Probe der Reaktionsmischung den Gehalt an aktivem, komplexiertem Nickel(0) durch Cyclovoltammetrie wie folgt: für die elektrochemische Oxidation wurde in einer cyclovoltammetrischen Messapparatur die Strom-Spannungs-Kurve in ruhender Lösung gegen eine Referenzelektrode gemessen, der der Konzentration proportionale Peakstrom ermittelt und über eine Kalibrierung mit Lösungen bekannter Ni(0)-Konzentrationen der Ni(0)-Gehalt der Probe bestimmt. Die in der Tabelle genannten Ni(0)-Werte geben den nach dieser Methode bestimmten Gehalt an Ni(0) in Gew.-% bezogen auf die gesamte Reaktionsmischung (Rm.) an.

### 3) Extraktion der Reaktionsmischung

Zur Extraktion legte man bei 30°C in einem Scheidetrichter 15 g der Reaktionsmischung vor, gab 15 g Adipodinitril und 30 g n-Heptan hinzu und schüttelte 60 sec intensiv durch. Anschließend wurde die Phasentrennzeit als Zeitspanne vom Ende des Schüttelns (t = 0) bis zur Ausbildung einer einheitlichen Oberphase (Heptanphase) und einer einheitlichen Unterphase (Dinitrilphase), bestimmt. Sie ist in der Tabelle angegeben.

Man trennte die Phasen voneinander und bestimmte mittels Elementaranalyse den Gehalt der Phasen an Zinkchlorid. Es wurde festgestellt, dass sich das Zinkchlorid quanitativ in der Unterphase (Dinitrilphase) befand.

**Tabelle (V zum Vergleich, Rm. Reaktionsmischung)**

| Beispiel | Masse Zinkpulver [g] | Stoffmenge Zinkpulver [mmol] | Stoffm. Zink : Stoffm. NiCl₂ | Ni(0)-Gehalt der Rm. [Gew.-%] | Phasentrennzeit |
|---|---|---|---|---|---|
| 1V | 1,0 | 14 | 1 : 2,1 | 0,22 | > 12 h |
| 2V | 1,4 | 20 | 1 : 1,5 | 0,34 | 60 min |
| 3V | 1,7 | 24 | 1 : 1,25 | 0,40 | 10 min |
| 4 | 2,0 | 30 | 1 : 1 | 0,54 | < 1 min |
| 5 | 3,2 | 45 | 1,5 : 1 | 0,54 | Spontane Trennung |

Die Vergleichsbeispiele 1V bis 3V zeigen, dass bei einem nicht erfindungsgemäßen Molverhältnis von Zink zu Nickelchlorid von <1 : 1, also Zinkunterschuss, die Phasentrennzeit wesentlich länger war als bei einem äquimolaren Verhältnis (Beispiel 4) bzw. einem Zinküberschuss (Beispiel 5).

## Patentansprüche

1. Verfahren zur Herstellung von Nickel(0)-Phosphorligand-Komplexen enthaltend mindestens ein Nickel(0)-Zentralatom und mindestens einen phosphorhaltigen Liganden, durch Umsetzung von Nickel(II)-halogeniden oder Nickel(II)-halogenid-Ether-Addukten mit Metallen, die elektropositiver sind als Nickel als Reduktionsmittel in Gegenwart des Liganden zu einer Reaktionsmischung, **dadurch gekennzeichnet, dass**
a) bei der Umsetzung das Molverhältnis Reduktionsmittel : Nickel(II)-Verbindung 1:1 bis 1000 : 1 beträgt, gerechnet als molares Verhältnis der Redoxäquivalente,
b) bei der Umsetzung das Molverhältnis phosphorhaltiger Ligand : Nickel(II)-Verbindung maximal 30: 1 beträgt, gerechnet als molares Verhältnis P-Atome: Ni-Atome,
c) in der erhaltenen Reaktionsmischung der Nickel(0)-Gehalt maximal 1,3 Gew.-% beträgt, und
d) die erhaltene Reaktionsmischung extrahiert wird, indem man mindestens ein Dinitril und mindestens einen Kohlenwasserstoff zuftigt, wobei sich mindestens zwei nichtmischbare Phasen bilden.

2. Verfahren nach Anspruch 1, **dadurch gekennzeichnet, dass** das Molverhältnis Reduktionsmittel : Nickel(II)-Verbindung 1 : 1 bis 5 : 1 beträgt, gerechnet als molares Verhältnis der Redoxäquivalente.

3. Verfahren nach den Ansprüchen 1 bis2, **dadurch gekennzeichnet, dass** der phosphorhaltige Ligand ausgewählt ist aus Phopshinen, Phosphiten, Phosphiniten und Phosphoniten.

4. Verfahren nach den Ansprüchen 1 bis3, **dadurch gekennzeichnet, dass** der phosphorhaltige Ligand aus einer Ligandlösung stammt, die bereits als Katalysatorlösung in Hydrocyanierungsreaktionen oder Isomerisierungsreaktionen verwendet wurde.

5. Verfahren nach den Ansprüchen 1 bis 4, **dadurch gekennzeichnet, dass** das Reduktionsmittel ausgewählt ist aus Zinkmetall und Eisenmetall.

6. Verfahren nach den Ansprüchen 1 bis 5, **dadurch gekennzeichnet, dass** man das Verfahren in einem Lösungsmittel durchführt, das ausgewählt ist aus organischen Nitrilen und aromatischen oder aliphatischen Kohlenwasserstoffen.

7. Verfahren nach den Ansprüchen 1 bis 6, **dadurch gekennzeichnet, dass** man diejenige Phase, worin die Nicket(0)-Phosphorligand-Komplexe gegenüber der Reaktionsmischung angereichert sind, abtrennt.

8. Verfahren nach Ansprüchen 1 bis 7, **dadurch gekennzeichnet, dass** in Schritt d) der Kohlenwasserstoff ausgewählt ist aus Cyclohexan, Methylcyclohexan, Cycloheptan, n-Hexan, n-Heptan, isomeren Heptanen, n-Octan, iso-Octan, isomeren Octanen und cis- und trans-Decalin.

## Claims

1. A process for preparing nickel(0)-phosphorus ligand complexes comprising at least one nickel(0) central atom and at least one phosphorus ligand by reacting a nickel(II) halides or nickel(II) halide-ether adducts with metals which are more electropositive than nickel as a reducing agent in the presence of the ligand to give a reaction mixture, wherein
a) the molar reducing agent : nickel(II) compound ratio in the reaction is from 1 : 1 to 1000 : 1, calculated as the molar ratio of the redox equivalents,
b) the molar phosphorus ligand: nickel(II) compound ratio in the reaction is not more than 30 : 1, calculated as the molar P atoms : Ni atoms ratio,
c) the nickel(0) content in the resulting reaction mixture is not more than 1.3% by weight and
d) the resulting reaction mixture is extracted by adding at least one dinitrile and at least one hydrocarbon to form at least two immiscible phases.

2. The process according to claim 1, wherein the molar reducing agent: nickel(II) compound ratio is from 1 : 1 to 5 : 1, calculated as the molar ratio of the redox equivalents.

3. The process according to claims 1 to 2, wherein the phosphorus ligand is selected from phosphines, phosphites, phosphinites and phosphonites

4. The process according to claims 1 to 3, wherein the phosphorus ligand stems from a ligand solution which has already been used as a catalyst solution in hydrocyanation reactions or isomerization reactions.

5. The process according to claims 1 to 4, wherein the reducing agent is selected from zinc metal and iron metal.

6. The process according to claims 1 to 5, which is carried out in a solvent which is selected from organic nitriles and aromatic or aliphatic hydrocarbons.

7. The process according to claims 1 to 6, wherein that phase in which the nickel(0)-phosphorus ligand complexes are enriched relative to the reaction mixture is removed.

8. The process according to claims 1 to 7, wherein the hydrocarbon in step d) is selected from cyclohexane, methylcyclohexane, cycloheptane, n-hexane, n-heptane, isomeric heptanes, n-octane, isooctane, isomeric octanes and cis- and trans-decalin.

## Revendications

1. Procédé pour la préparation de complexes de nickel(0)-ligand phosphoré contenant au moins un atome central de nickel(0) et au moins un ligand phosphoré, par mise en réaction d'halogénures de nïckel(II) ou d'adduits halogénure de nickel(II)-éther avec des métaux qui sont plus électropositifs que le nickel, en tant que réducteurs, en présence du ligand pour l'obtention d'un mélange réactionnel, **caractérisé en ce que**
a) dans la réaction le rapport molaire réducteur : composé de nickel (II) vaut de 1 : 1 à 1 000 : 1, calculé en tant que rapport molaire des équivalents redox,
b) dans la réaction le rapport molaire ligand phosphoré : composé de nickel(II) est au maximum de 30 : 1, calculé en tant que rapport molaire atomes de P : atomes de Ni,
c) la teneur en nickel(0) du mélange réactionnel obtenu est au maximum de 1,3 % en poids, et
d) on extrait le mélange réactionnel obtenu en ajoutant au moins un dinitrile et au moins un hydrocarbure, de sorte qu'il se forme au moins deux phases non miscibles.

2. Procédé selon la revendication 1, **caractérisé en ce que** le rapport molaire réducteur : composé de nickel (II) vaut de 1 : 1 à 5 : 1, calculé en tant que rapport molaire des équivalents redox.

3. Procédé selon les revendications 1 et 2, **caractérisé en ce que** le ligand phosphoré est choisi parmi des phosphines, phosphites, phosphinites et phosphonites.

4. Procédé selon les revendications 1 à 3, **caractérisé en ce que** le ligand phosphoré provient d'une solution de ligand qui a été déjà utilisée comme solution de catalyseur dans des réactions d'hydrocyanation ou des réactions d'isomérisation.

5. Procédé selon les revendications 1 à 4, **caractérisé en ce que** le réducteur est choisi parmi le zinc métallique et le fer métallique.

6. Procédé selon les revendications 1 à 5, **caractérisé en ce que** le procédé est effectué dans un solvant, qui est choisi parmi des nitrites organiques et des hydrocarbures aromatiques ou aliphatiques.

7. Procédé selon les revendications 1 à 6, **caractérisé en ce qu'**on sépare la phase dans laquelle les complexes de nickel(0)-ligand phosphoré sont concentrés par rapport au mélange réactionnel.

8. Procédé selon les revendications 1 à 7, **caractérisé en ce que** dans l'étape d) l'hydrocarbure est choisi parmi le cyclohexane, le méthylcyclohexane, le cycloheptane, le n-hexane, le n-heptane, les heptanes isomères, le n-octane, l'iso-octane, les octanes isomères et la *cis-* et la *trans*-décaline.
